# EUROPÄISCHE PATENTSCHRIFT

(11) **EP 0 863 522 B1**
(45) Veröffentlichungstag und Bekanntmachung des Hinweises auf die Patenterteilung: **14.09.2005**
(21) Anmeldenummer: 98103657.7
(22) Anmeldetag: 03.03.1998
(51) Int. Cl.: H01H 3/02, H01H 1/58, H01R 13/70, H01R 31/06, B60R 16/02, B60L 3/00

(54) **Notabschaltvorrichtung, insbesondere bei Elektro-Flurförderzeugen zum Trennen der Verbindung zwischen Motor oder dessen Steuereinheit und den Antriebsbatterien für diesen**
Emergency switching device, in particular for load-handling trucks, to interrupt the connection between a motor or its control unit and the batteries
Dispositif de coupure d'urgence en particulier pour chariots, pour interrompre la connection entre un moteur ou son unité de commande et les batteries

(30) Priorität: 03.03.1997 DE 29703767 U; 01.09.1997 DE 19738074
(43) Veröffentlichungstag der Anmeldung: 09.09.1998
(73) Patentinhaber: REMA Lipprandt GmbH & Co. KG, D-53175 Bonn (DE)
(72) Erfinder: Standke, Kurt, 53225 Bonn (DE); Passin, Jürgen, 56729 Langenfeld (DE); Krupp, Willi, 53639 Königswinter-Ittenbach (DE)
(74) Vertreter: Koch, Theodor

(56) Entgegenhaltungen:
- EP-A- 0 212 048
- EP-A- 0 354 582
- DE-A- 3 909 604
- DE-A- 4 422 171
- DE-U- 29 612 378
- FR-A- 2 694 843
- US-A- 4 355 216

## Beschreibung

Die Erfindung betrifft eine Notabschaltvorrichtung, insbesondere bei Elektro-Flurförderzeugen zum Trennen der Verbindung zwischen Elektromotor oder dessen Steuereinheit und den Antriebsbatterien für diesen,bestehend aus einem Schlagknopf für eine Not-Aus-Taste, einem Stößel und einem Schalter mit mindestens einem im Schaltergehäuse angelegten Kontaktblöckchen aus Kontaktelementen, wobei die sofortige, direkte Unterbrechung des Stromkreises bei einem Schlag auf den Schlagknopf durch einen Sprungschaltmechanismus des Schalters erfolgt und ein eingeleiteter Abschaltvorgang selbsttätig zu Ende geführt und der Schalter aus dieser Aus-Positionsstellung durch Ziehen des Schlagknopfes in eine die Stromverbindung herstellende Einschalt-Positionsstellung bringbar ist.

Des weiteren betrifft sie ein Elektro-Flurförderzeug mit einer derartigen Notabschaltvorrichtung.

Notabschaltvorrichtungen mit einer Not-Aus-Taste zur Abschaltung der Stromversorgung von Elektroflurförderzeugen werden üblicherweise unmittelbar im Bereich des Steuerpultes des Elektroflurförderzeuges angelegt. Es kommt dabei eine zweipolige Geräte-Steckvorrichtung z.B. nach DIN-Norm 43589 oder eine entsprechende Steckvorrichtung mit Flachkontakten gemäß US-Norm mit übersteckbarem Geräte-Stecker und Geräte-Steckdose und den entsprechenden Kabelstücken des Anschlußkabels zum Elektromotor und zu den Antriebsbatterien unmittelbar im Batterietrog zu liegen. Es werden dabei Notabschalter in Form von Not-Aus-Tastern verwendet, bei welchen mit Betätigung eines Stößels durch Drücken des Schlagknopfes eine überlistungssichere Betätigung des Sprungschalt-Rastverhaltens der Taste erreicht wird. Es wird dabei ein Konstruktionsprinzip mit Haftmagnet und Druckfeder verwendet oder die bloße Vorspannung einer Feder, durch die der Stößel unbeeinflußbar von außen in Richtung der Kontaktblöckchen des Schalters bewegt wird und dessen Kontaktelemente getrennt werden.

Not-Aus-Befehlsgeräte, wie z.B. aus der EP 0 212 048 A2 bekannt, sind dabei nach VDE 0660 Teil 207 und IEC 204/VDE 0113 bekannt und werden von verschiedensten Firmen hergestellt.

Notabschaltvorrichtungen mit Not-Aus-Tastern und einem Schlagknopf zur Abschaltung des Motors und zum Einschalten durch Ziehen des Schlagknopfes werden dabei bei Elektro-flurförderzeugen ohne besondere spezifische Ausbildung der Anschlußkontakte für die zweipoligen Anschlußkabel des Elektromotors und der Antriebsbatterien verwendet, wobei insofern die Anschlußkabel an den Klemmleisten mittels üblicher Anschlußmittel wie Kabelschuhe festzulegen sind.

Von der im Bereich des Steuerpultes üblicherweise angelegten Notabschaltvorrichtung wird dabei ein Anschlußkabel in den Batterietrog geführt, wobei ein von dem Batteriesatz ausgehendes Anschlußkabel mit diesem Kabel über eine Geräte-Steckvorrichtung kontaktierbar ist.

Es ist dabei nachteilig, daß die Anschlußkabel im Batterietrog über eine größere Länge und in mehreren Schlaufen üblicherweise zu liegen kommen, wobei dieses Kabel und die Geräte-Steckvorrichtung mit der Batterie-Steckdose und dem Motor- bzw. Fahrzeugstecker unmittelbar mechanischen und chemischen Belastungen im Batterietrog ausgesetzt sind.

Der Erfindung liegt somit die Aufgabe zugrunde, eine Notabschaltvorrichtung der eingangs genannten Art zu schaffen, an welcher unmittelbar selbst zumindest ein Steckvorrichtungsanschluß für eine Geräte-Steckdose angelegt ist, insbesondere für eine Batteriesteckdose des Anschlußkabels von Antriebsbatterien eines Elektroflurförderzeuges, wobei der Anschluß der mit Strom zu versorgenden Gerätschaft, z.B. eines Motorkabels, in üblicher Weise über Klemmstücke oder Verschraubungen ohne Steckvorrichtung fest vorgesehen sein kann.

In dem Schaltergehäuse der Notabschaltvorrichtung sollen dabei Anschlußkontakte des oder der Steckvorrichtungsanschlüsse, insbesondere in der benötigten Stärke für den Anschluß einer für Elektro-Flurförderzeuge dienenden Batteriesteckdose und auch möglichst für weitere im Zusammenhang mit Elektro-Flurförderzeugen zu verwendenden Steckvorrichtungen anderer Gerätschaften anlegbar sein.

Dabei sollen auch die zu verwendenden Schaltkontakte möglichst derart ausgebildet und angelegt sein, das trotz beim Betrieb der Elektro-Flurförderzeuge auftretender hoher Stromstärken (z.B. bei Verwendung einer 160 A Steckvorrichtung) kein erheblicher Abbrand der Schaltkontakte eintritt.

Dabei soll vorzugsweise eine Anordnung der Notabschaltvorrichtung unmittelbar seitlich des Batterietroges derart möglich sein, daß die Steckvorrichtung nur noch minimalen mechanischen und chemischen Belastungen aufgrund der dortigen Anlage und der Entnahme der Batterien ausgesetzt ist.

Es soll insofern ein möglichst einfacher mechanischer Anschluß der Antriebsbatterien gegeben sein, wobei möglichst ein fester Anschlußpunkt ohne lose im Batterietrog liegende Geräte-Steckvorrichtung gegeben sein soll. Es soll insofern auch die Länge der Anschlußkabel der Antriebsbatterien und des Elektromotors kurz bemessbar sein und ein einfacherer und geschützter Anschluß des Batterieanschlußkabels unmittelbar an der Notabschaltvorrichtung über eine Batterie-Steckdose möglich sein, für welche ein Stecker unmittelbar an der Notabschaltvorrichtung angelegt ist.

Zur Lösung dieser Aufgabe ist die Ausbildung einer Notabschaltvorrichtung der eingangs genannten Art gemäß Patentanspruch 1 vorgesehen.

Danach ist das Schaltergehäuse der Not-Aus-Taste unmittelbar mit einem zweipoligen seitlichen Geräteanschluß in Form eines Steckvorrichtung-Steckerteils versehen, wobei zumindest einer der beiden Stiftkontakte des Steckerteils durch die Betätigung des Schlagknopfes und die damit erfolgende Verstellung des oder der Kontaktelemente des Kontaktblöckchens des Schalters der Not-Aus-Taste entsprechend der Ein- oder Ausstellung des Schalters mit dem seiner Phase entsprechenden Kontakt für den Anschluß des Motorkabels in Verbindung steht oder getrennt ist und der Schalter sich somit in Einschalt- oder Aus-Positionsstellung befindet.

Dadurch daß am Schaltergehäuse der Notabschaltvorrichtung unmittelbar selbst ein zweipoliger als Batterieanschluß nutzbarer Geräteanschluß in Form eines Steckvorrichtung-Steckerteils vorgesehen ist, kann dabei auf die Anlage einer zusätzlichen Geräte-Steckvorrichtung, beispielsweise zum Anschluß des in einem Batterietrog gelegenen Batteriesatzes verzichtet werden, wobei z.B. das Anschlußkabel der Batterien mit der Batterie-Steckdose unmittelbar bis zu dem zusätzlichen Steckvorrichtung-Steckerteil im Schaltergehäuse geführt wird.

Es ist dort möglich, die Batterie-Steckdose wie bei einer üblichen Geräte-Steckvorrichtung am Schaltergehäuse der Notabschaltvorrichtung anzuschließen und je nach Schaltstellung mit einem beispielsweise fest verschraubten Anschlußkabel des Motoranschlusses zu kontaktieren.

Gemäß Patentanspruch 2, 3 und 4 ist dabei zusätzlich zur Anlage des Steckvorrichtung-Steckerteils die Anlage eines Steckvorrichtung-Dosenteils am Schaltergehäuse vorgesehen, wobei entsprechende Kontakte des Steckerteils und Dosenteils unmittelbar ineinander übergehen und somit über das Steckvorrichtung-Dosenteil, welches beispielsweise als Ladegeräteanschluß dient, unmittelbar über die Anschlüsse der Notabschaltvorrichtung ein Laden der Antriebsbatterien des Elektro-Flurförderzeuges bei Anschluß der Batterie-Steckdose erfolgen kann.

Das Schaltergehäuse und die Kontaktblöckchen der verwendeten Not-Aus-Taste sowie vom Steckvorrichtung-Steckerteil bzw. des Steckvorrichtung-Dosenteils ist dabei vorzugsweise als kombiniertes zusammengehöriges oder als einteiliges Gehäuse ausgebildet.

Gemäß Patentanspruch 5 und 6 sind dabei der Steckvorrichtung-Steckerteil und/oder Steckvorrichtung-Dosenteil jeweils mit einem Dosen- und Steckergehäuseansatz, Kontakten sowie einem Steckgesicht nach Euro-Norm EN 1175 oder DIN-Norm 43589 der Steckvorrichtung für Elektro-Flurförderzeugen ausgebildet. Alternativ ist dabei die Ausbildung dieser zweipoligen Steckvorrichtungen gemäß der Norm für Flachkontakten, beipielsweise gemäß den Bestimmungen in den USA für Elektro-Flurförderzeuge vorgesehen.

Gemäß Patentanspruch 7 sind die Stiftkontakte und Buchsenkontakte des Batterie- und Ladegeräteanschlusses nicht nur elektrisch miteinander in Verbindung stehend ausgebildet, sondern unmittelbar als gemeinsame Kontaktteile ausgebildet, welche oberhalb des unteren Kontaktelementes der Kontaktblöckchen derart geführt sind, daß durch die Schaltbewegung des Stößels die Not-Aus-Taste bzw. die unteren Kontaktelemente in Aus-Positionsstellung bzw. Einschalt-Positionsstellung bringbar sind.

Gemäß Patentanspruch 8 erfolgt dabei die Anlage mehrerer Kontaktblöckchen im Schaltergehäuse, wobei insofern mit der Schaltbewegung des Stößels gleichzeitig eine Trennung sowohl der positiven als auch der negativen Phase der Antriebsbatterien von den entsprechenden Anschlüssen des Elektromotors erfolgt.

Patentanspruch 9 betrifft dabei eine vorteilhafte Anlage des Stößels bei Verwendung zweier Kontaktblöckchen gemäß Patentanspruch 8, sowie Patentanspruch 10 eine vorteilhafte Ausbildung des Sprungschalt-Mechanismusses der Not-Aus-Taste, wobei lediglich die Anlage von Stellfedern ohne Haftmagnet vorgesehen ist.

Patentanspruch 11 betrifft dabei einen Schaltmechanismus, mit welchem über die Betätigung des Stößels unmittelbar eine gemeinsame Schaltung der Kontaktblöckchen möglich ist, wobei ein Aufnahmeteil mit einem Aufnahmeraum Verwendung findet, der die Kontaktblöckchen seitlich umgibt, wobei gemäß Patentanspruch 12 an der unteren Innenwandung des Aufnahmeraumes die Kontaktteile für den Motoranschluß angelegt sind.

Patentanspruch 13 betrifft dabei die Anordnung eines abgewinkelten Halte- und Befestigungsflansches an dem Schaltergehäuse der Notabschaltvorrichtung und die Patentansprüche 36 - 39 eine vorteilhafte Anordnung der Notabschaltvorrichtung an Elektro-Flurförderzeugen, insbesondere unter Verwendung eines abgewinkelten Halte- und Befestigungsflansches gemäß Patentanspruch 13.

Die Patentansprüche 14 - 21 betreffen dabei Notabschaltvorrichtungen mit einer Anordnung von Dauermagneten im Bereich der Kontaktelemente der Kontaktblöckchen, so daß Schaltfunken und ein Abbrand der Kontaktelemente vermieden werden.

Die Patentansprüche 22 - 35 betreffen dabei vorteilhafte Ausbildungen der Anschlüsse der Notabschaltvorrichtung für die Leitungen des Motorkabels über Kontaktbolzen, welche als Teil einer Schiebeführung mit unteren Kontaktelementen des Schalters in Verbindung stehen, dabei aber vorzugsweise nur innerhalb des Schaltergehäuses geführt sind. Der eigentliche Anschluß für das Motorkabel wird dabei durch nach außen unverschieblich vorragende stiftförmige Kontaktstücke oder Kontakthülsen gebildet, welche von den Kontaktbolzen im Innern des Schaltergehäuses zumindest in der Schalterstellung "Ein" kontaktiert werden.

Die erfindungsgemäße Notabschaltvorrichtung mit an Seitenwandungen des Schaltergehäuses der verwendeten Not-Aus-Taste angeordneten Dosen- und/oder Steckerteil zur Bildung einer dortigen Steckvorrichtung für einen Batterie- und/oder Ladegeräteanschluß wird im folgenden anhand mehrerer Ausführungsformen und deren Zeichnungen näher erläutert.

In den Zeichnungen zeigen:

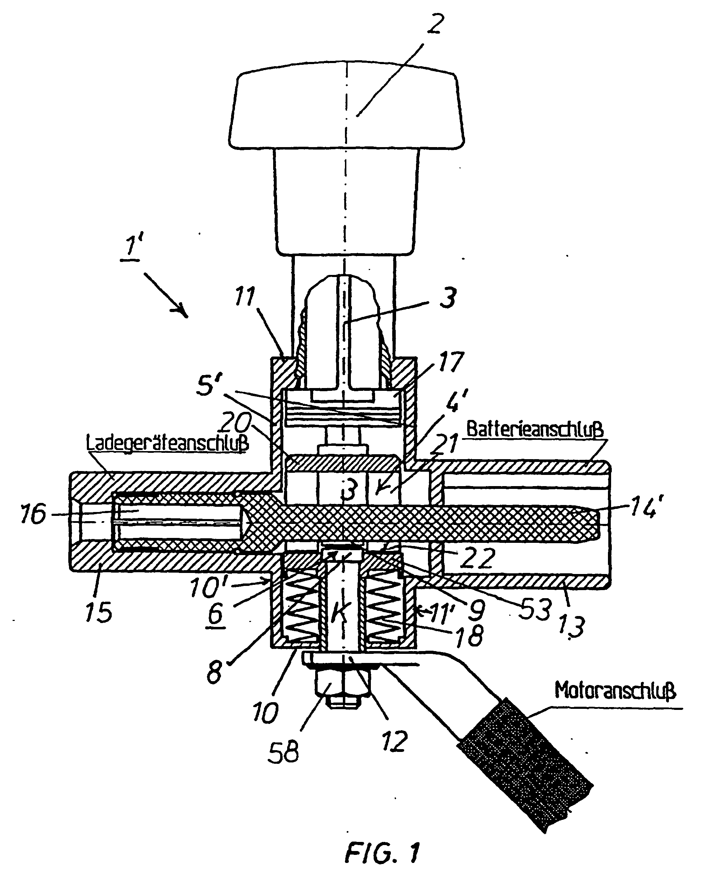

- Figur 1:: Eine erste Ausführungsform einer Notabschaltvorrichtung zum Trennen eines Elektromotoranschlusses von einem Batterieanschluß mittels einer Not-Aus-Taste, wobei über einen Schlagknopf der Not-Aus-Taste der Steckerteil für einen zweipoligen Batterieanschluß und der Dosenteil eines zweipoligen Ladegeräteanschlusses einer an den beiden gegenüberliegenden Längsseiten des Schaltergehäuses angelegte Kombi-Steckvorrichtung vom Elektromotoranschluß trennbar ist, der über einen Kabelschuhanschluß an der Unterseite der Notabschaltvorrichtung fest angelegt ist, wobei eine Längsschnittdarstellung durch das Schaltergehäuse in einer durch das gemeinsame linke Kontaktteil der Kombi-Steckvorrichtung gelegten Vertikalebene gegeben ist;

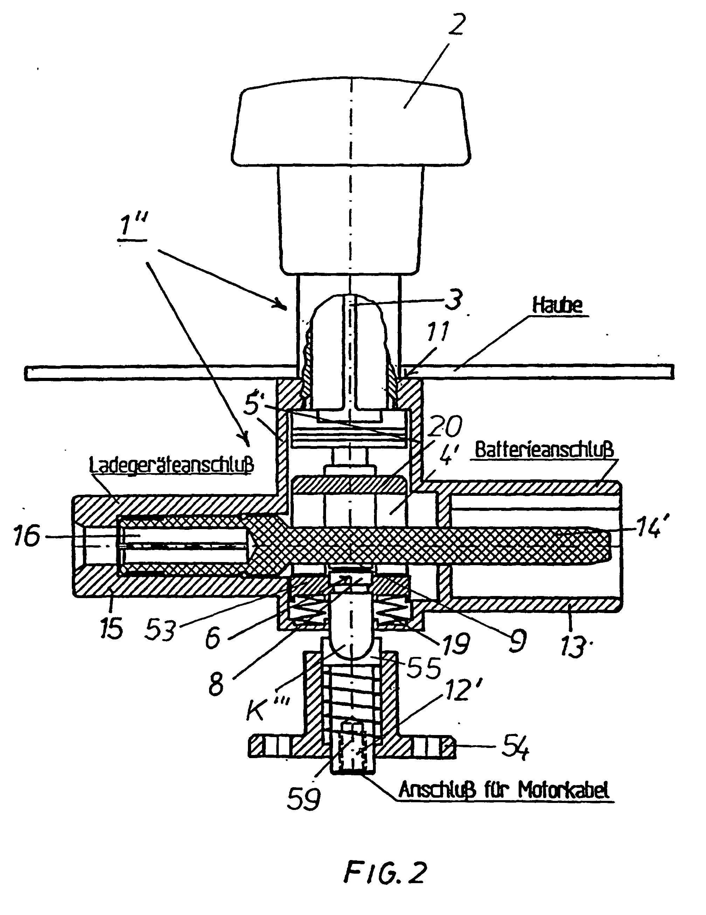

- Figur 2:: Eine Anordnung der Notabschaltvorrichtung gemäß Figur 1 mit Ladegeräteanschluß und Batterieanschluß seitlich unterhalb einer Haube des Batterietroges eines Elektroflurförderzeuges, wobei der seitlich durch eine Öffnung der Haube geführte Schlagknopf den Batterietrog überragt und ein nicht durch Zug nach unten verstellbarer Anschluß des Motorkabels vorgesehen ist;

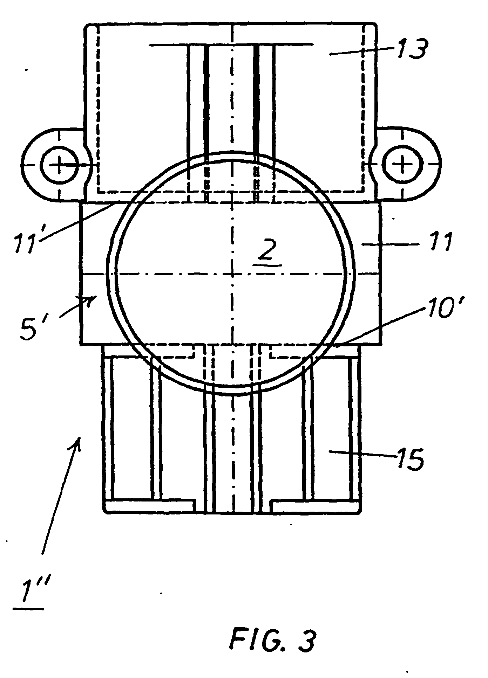

- Figur 3:: Eine Draufsicht auf den Schlagknopf und die Oberseite des Schaltergehäuses der Notabschaltvorrichtung gemäß Figur 1 und 2 mit dem quer zu den Längsseiten des Schaltergehäuses angeformten Stecker- und Dosenteil der Kombi-Steckvorrichtung für den Ladegeräte- und Batterieanschluß;

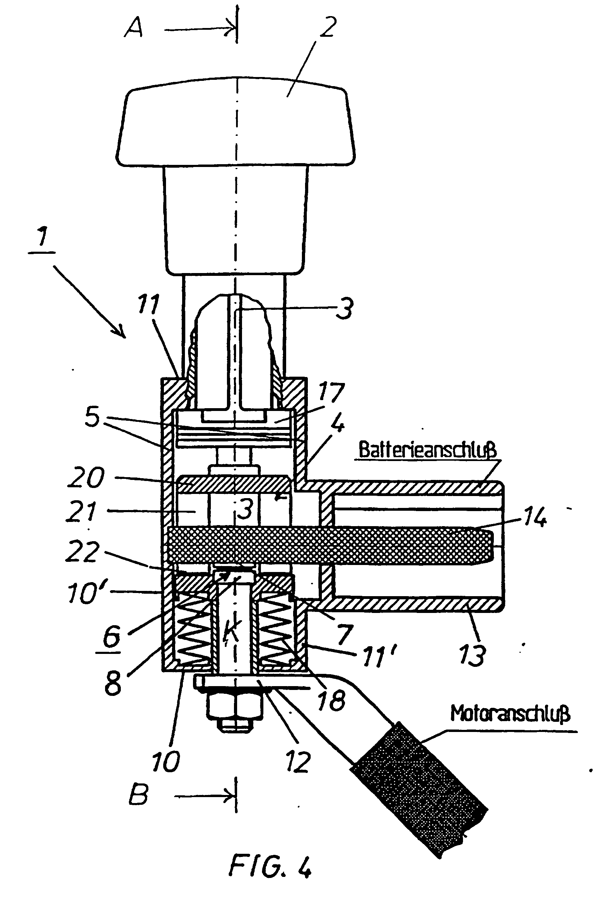

- Figur 4:: Eine gegenüber der Notabschaltvorrichtung gemäß Figur 1-3 vereinfachte Notabschaltvorrichtung, welche ohne Ladegeräteanschluß lediglich einen Steckerteil für einen Batterieanschluß an einer der Längsseiten des Schaltergehäuses aufweist, in einer Längsschnittdarstellung gemäß Figur 1;

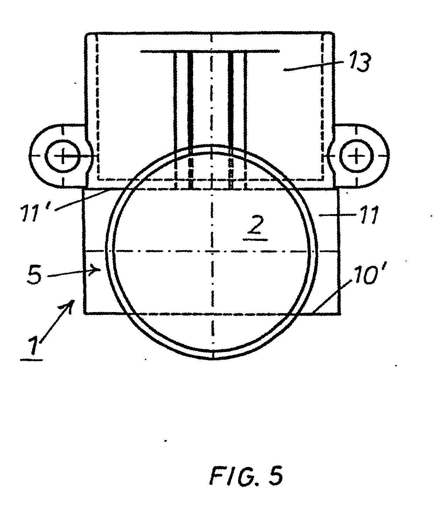

- Figur 5:: Eine Draufsicht auf den Schlagknopf und die Oberseite des Schaltergehäuses der Notabschaltvorrichtung gemäß Figur 4 mit dem quer zu einer der Längsseiten des Schaltergehäuses angeformten Steckerteil für den Batterieanschluß;

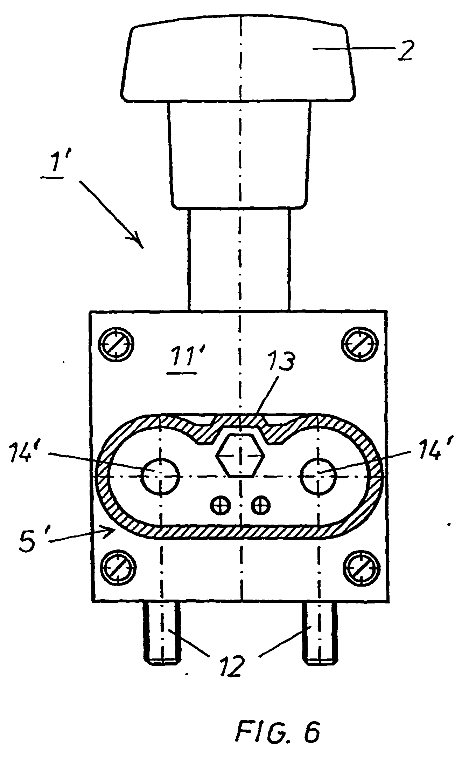

- Figur 6:: Eine Seitenansicht der Notabschaltvorrichtung nach Figur 1 oder 4 unter Darstellung der Längsseite des Schaltergehäuses mit dem angeformten Steckerteil für den Batterieanschluß, wobei die Ausbildung des Gehäuseabschnittes des Steckerteils und die Anlage der Stift-Hauptkontakte und Pilotkontakte sowie der Codierstifte entsprechend der DIN-Norm für Elektroflurförderzeug-Steckvorrichtungen erfolgt. Eine entsprechende Normausbildung erfolgt dabei bei Anlage eines Dosenteils einer Kombi-Steckvorrichtung gemäß Figur 1-3 für ein Ladegeräteanschluß;

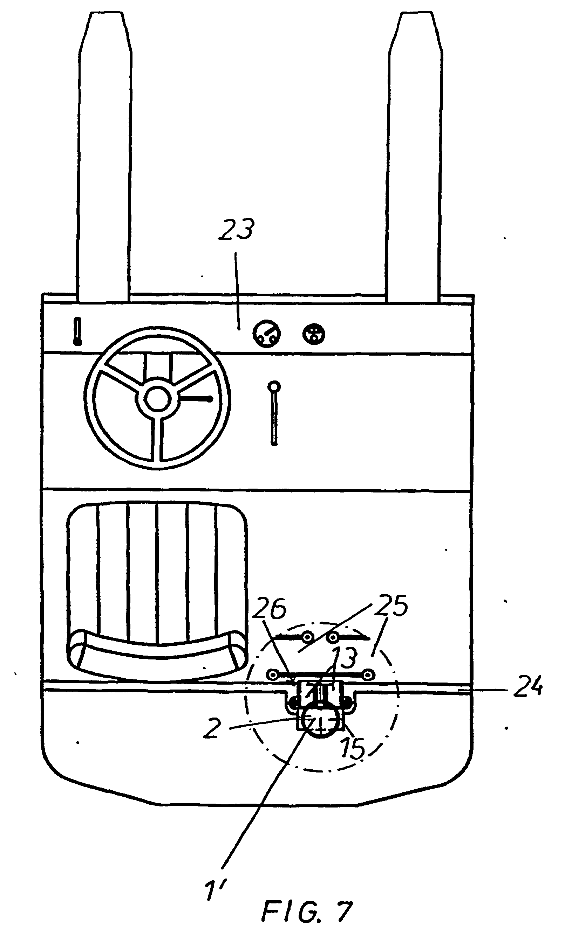

- Figur 7:: Eine bevorzugte Anordnung der Notabschaltvorrichtung nach Figur 1-4, 6 am Heck eines Gabelstaplers, seitlich außerhalb des Batterietroges, wobei der Steckerteil für den Batterieanschluß unmittelbar seitlich bis zum Anfang des Batterietroges ragt, ohne dabei die dortige Handhabung der Batterien zu beeinträchtigen;

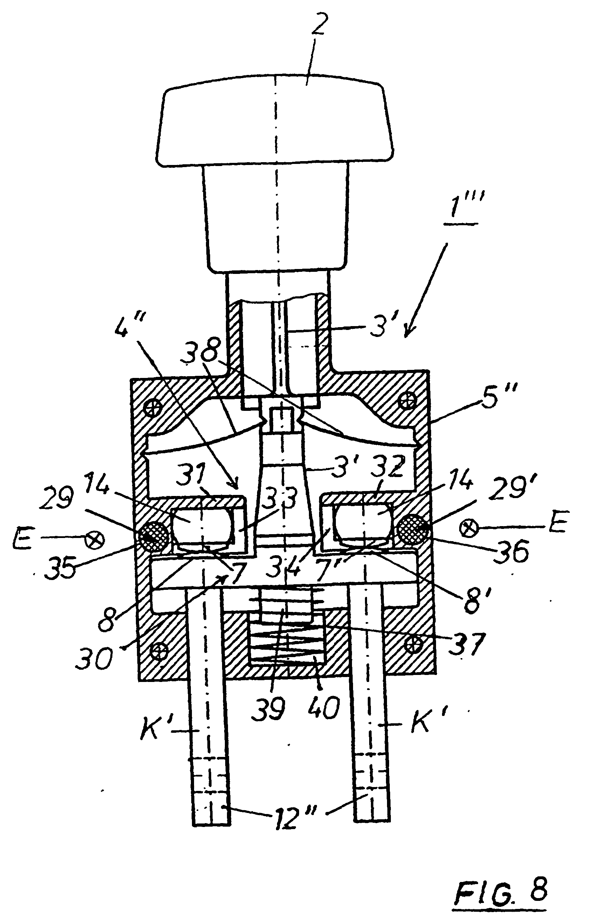

- Figur 8:: Eine gegenüber der Notabschaltvorrichtung der Figur 4-6 geringfügig abgeänderte Notabschaltvorrichtung, welche HochleistungsPermanentmagnete zur Verhinderung eines Zündfunkens zwischen den Kontaktelementen aufweist und eine vereinfachte Spiralfeder zur Kontaktgebung bei der Schalterstellung "Ein", teilweise im Querschnitt gemäß der Schnittlinie AB der Figur 4;

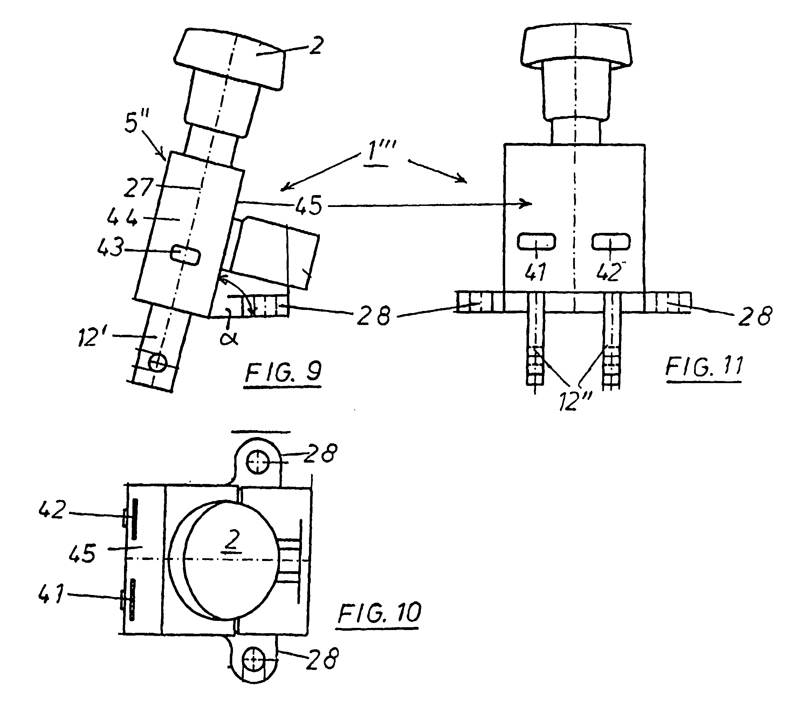

- Figur 9:: Eine Seitenansicht der in Figur 8 dargestellten Notabschaltvorrichtung unter Darstellung von im Bereich der sich schließenden Kontaktelemente im Schaltergehäuse angelegter seitlicher Belüftungsschlitze und eines unter dem Kombi-Steckvorrichtungs-Steckerteil angeordneten abgewinkelten Halte- und Befestigungsflansches, welcher in der Zeichnung horizontal ausgerichtet ist, wobei die ihn tragende Seitenwandung des rechtwinkligen Schaltergehäuses sich in einer Schräglage befindet;
- Figur 10:: Eine Draufsicht auf den Schlagknopf und das Gehäuseoberteil der Notabschaltvorrichtung unter Darstellung des am unteren Ende des Schaltergehäuses sich jeweils seitlich nach rechts und links mit einer Befestigungsöse erstreckenden Halte- und Befestigungsflansches;
- Figur 11:: Eine Ansicht des Halte- und Befestigungsflansches,gesehen auf die Seitenwandung des Schaltergehäuses, welche keinen Kombi-Steckvorrichtung-Steckerteil aufweist, wobei die in der Draufsicht der Figur 10 schmal erscheinenden Belüftungsschlitze der Kontaktelemente in der Wandung des Schaltergehäuses in voller Breite erkennbar sind;

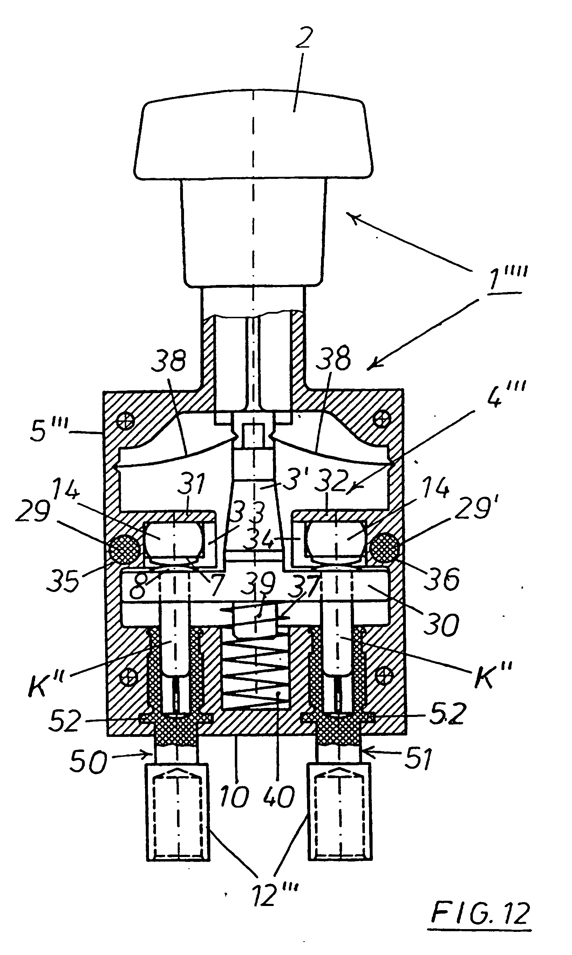

- Figur 12:: Eine Notabschaltvorrichtung gemäß Fig. 8 mit Hochleistungs-Permanentmagneten, wobei die von den Kontaktelementen unterhalb der Kontaktbrücke ausgehenden Kontaktbolzen nicht durch die Gehäuseunterseite geführt sind, so daß die Schalterstellung nicht durch einen am Anschluß des Motorkabels zur Wirkung kommenden Zug verstellbar ist;

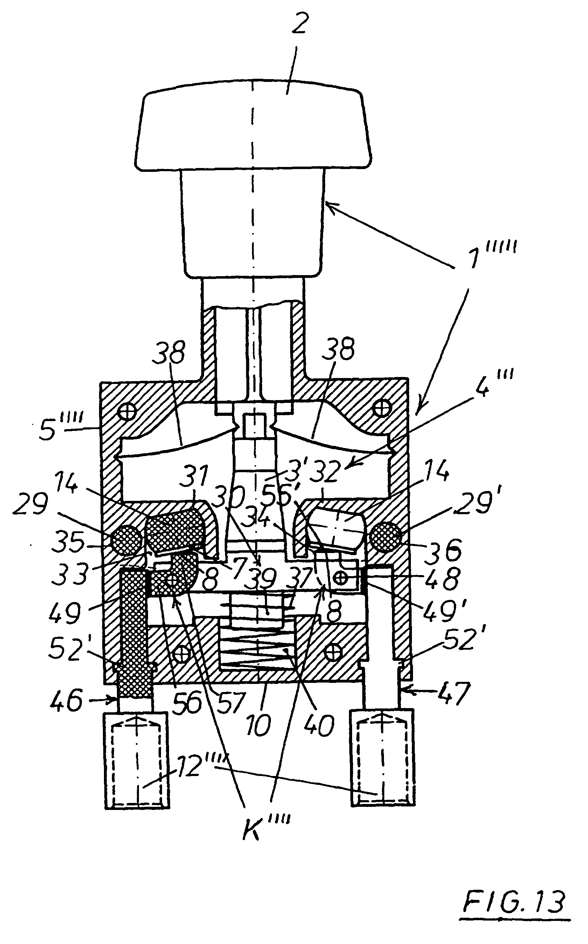

- Figur 13:: Eine Notabschaltvorrichtung bei welcher statt innerhalb von Kontakthülsen geführter Kontaktbolzen der Figur 12 als Schiebekontakte ausgebildete Kontaktbolzen verwendet werden,die längs der Außenseite von Kontaktstücken geführt sind, welche durch die Gehäuseunterseite unverschieblich ragen;

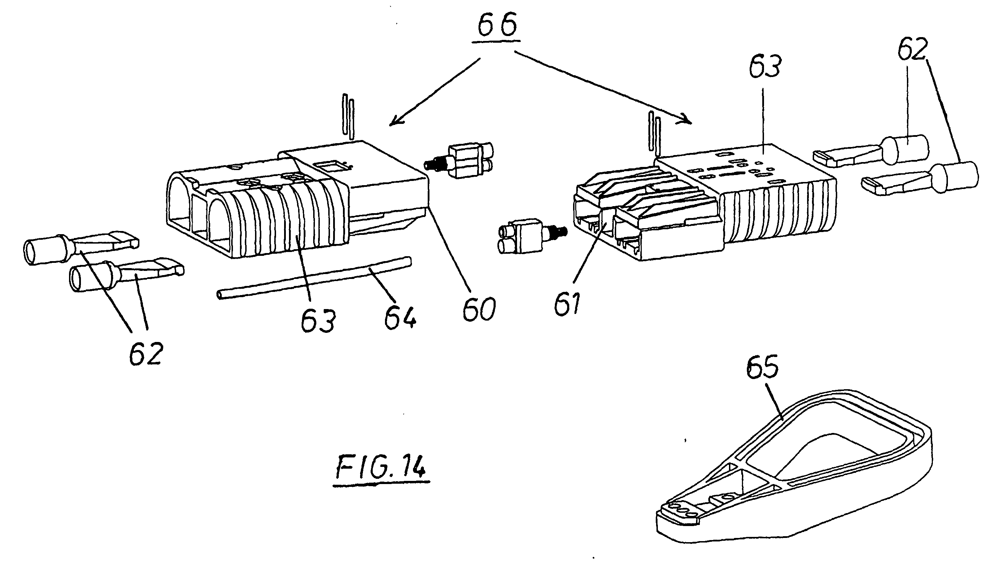

- Figur 14:: Die Darstellung zweier zu übersteckender Flachkontaktstecker wie sie in den USA für Batterie-Elektro-Flurförderzeuge verwendet werden unter Darstellung der Gehäuseansätze und Hauptkontakte;

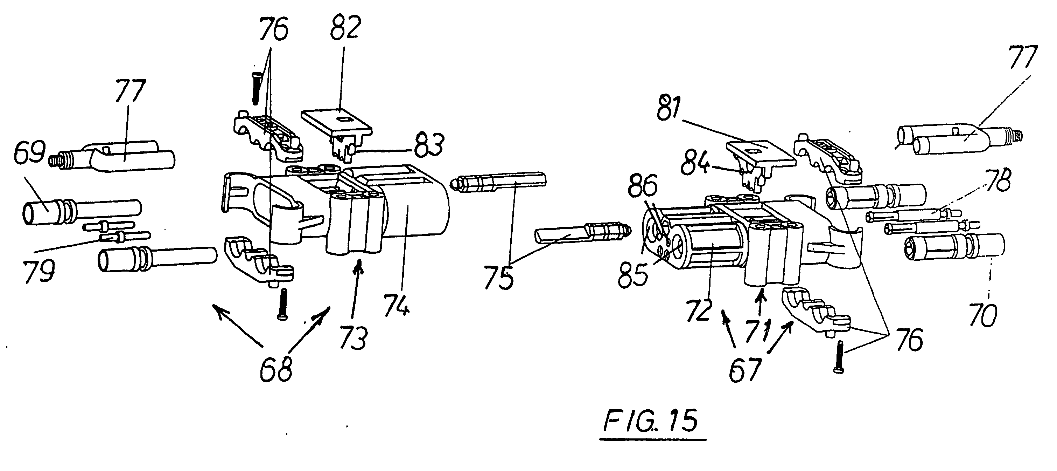

- Figur 15:: Eine Geräte-Steckvorrichtung mit einem Steckerteil und Dosenteil gemäß Euro-Norm EN 1175 bzw. DIN Norm 43589.

In den Figuren 1,2,3 und 6 ist eine Notabschaltvorrichtung 1',1'' gezeigt, welche jeweils einen Schlagknopf 2, einen Stößel 3 für einen Schalter 4' aufweist. Der Schalter 4' weist dabei ein Schaltergehäuse 5' auf, welches rechteckförmig geformt ist und dabei an der Schaltergehäuseoberseite 11 eine Anformung zur Führung des Schlagknopfes 2 aufweist und an der unteren Schaltergehäuseseite 10 Anschlüsse 12,12' für das Anschlußkabel eines Elektromotors.

An der linken Längsseite 10' und der rechten Längsseite 11' des Schaltergehäuses 5' ist dabei jeweils ein Steckvorrichtung-Steckerteil 13 oder ein Steckvorrichtung-Dosenteil 15 für einen Batterieanschluß bzw. Ladegeräteanschluß angeformt. Dosen- und Steckerteilgehäuseansatz des Steckerteils 13 und Dosenteils 15 sind dabei zueinander ausgerichtet, wobei ein gemeinsames längliches Kontaktteil 14',16, welches quer durch das Schaltergehäuse 5' geführt ist, jeweils ein Stiftkontakt 14' des Steckerteils 13 und ein Buchsenkontakt 16 des Dosenteils 15 bildet.

Wie aus Figur 6 erkenntlich, sind dabei sowohl das Steckerteil 13 als auch das dort nicht dargestellte Dosenteil 15 der am Schaltergehäuse 5' angelegten Kombisteckvorrichtung mit einem Dosen- und Steckerteilgehäuseansatz sowie Hauptkontakten, Pilotkontakten und Codierstiften und Steckergesicht nach Euro-Norm und/oder DIN-Norm 43589 ausgebildet, welche für Steckvorrichtungen für Elektro-Flurförderzeuge gilt. Ein entsprechendes Steckergesicht weisen dabei die Notabschaltvorrichtungen 1,1''' gemäß Figur 4, 5, 8-11 auf, welche lediglich ein Steckvorrichtung-Steckerteil 13 besitzen.

Es ist insofern möglich, genormte Ladegerätestecker bzw. Batteriesteckdosen von Ladegeräte bzw. Antriebsbatterien unmittelbar an die Kombisteckvorrichtung der Notabschaltvorrichtung anzuschließen.

Im Gegensatz zur vorgesehenen Steckvorrichtung für den Ladegerätanschluß und/oder Batterieanschluß erfolgt dabei der Elektromotoranschluß in herkömmlicherweise über Kabelschuhe und Schraub- und Klemmvorrichtungen an den an der Schaltergehäuseunterseite 10 befindlichen Anschlüssen 12,12',12'', 12''' und 12'''' gem. Fig. 1, 2, 4, 8, 9, 12 und 13.

Bei der Notabschaltvorrichtung 1' Figur 1 gemäß sowie der abgeänderten Ausführungsform der Notabschaltvorrichtung 1 gemäß Figur 4 mit lediglich einem seitlichen Batterieanschluß ist dabei ein Anschluß 12 des Elektromotorkabels über einen Kabelschuh unmittelbar über einen hohlen Kontaktbolzen K vorgesehen, welcher in einem oberen Lagerflansch 53 das untere Kontaktelement 8 des Kontaktblöckchens 6 des Schalters 4,4' trägt, während in der Ausführungsform der Notabschaltvorrichtung 1'' gemäß Figur 2 ein abweichender Anschluß 12' für das Elektromotorkabel mit einem abweichend am unteren Ende in einer äußeren Kontakthülse 54 gegen Zug gesicherten, federnd mittels einer längsverschieblichen Kontakt- und Lagerplatte 55 gelagerten Kontaktbolzen K''' vorgesehen ist.

Gemäß Figur 8 erfolgt dabei die Lagerung der unteren Kontaktelemente 8, 8' des Schalters 4'' nicht auf in der Schaltstellung "Ein" gegen den Stiftkontakt 14,14' verschiebbaren Kontaktbolzen, sondern auf einer Kontaktbrücke 30.

Diese steht dabei ebenfalls unter Wirkung einer unteren Spiralfeder 37 und einer oberen stärkeren Blattfeder 38, durch deren obere und untere Raststellung die Schalt - stellungen "Ein" und "Aus" bestimmt werden.

Diese Kontaktbrücke 30 weist dabei 2 beabstandete, nach unten um 90° abgewinkelte vorstehende, eine Schiebeführung bildende Kontaktbolzen K' auf, welche durch die untere Schaltergehäuseseite 10 geführt sind.

Diese sind dabei mit dem auf der Oberseite der Kontaktbrücke 30 angelegten, linken bzw. rechten unteren Kontaktelement 8,8' elektrisch verbunden und stellen somit einen Anschluß 12'' für 2 Pole des Elektromotorkabels dar.

Die gemeinsamen Kontaktteile 14', 16 aus Stift- und Hülsenkontakt der Notabschaltvorrichtung 1', 1'' gemäß Figur 1, 3, 6 und 7 sowie der bloße Stiftkontakt 14 der Notabschaltvorrichtung 1, 1''' gemäß Figur 4 und 8 sind dabei von dem unteren mit dem Motoranschluß verbundenen Kontaktelement 8 in der unteren Schalterstellung "Aus" getrennt und in der oberen Schalterstellung "Ein" elektrisch kontaktiert und somit in der oberen Schalterstellung mit dem Motoranschluß in elektrischer Verbindung gebracht.

Bei dem verwendeten Schalter 4,4',4'' der Notabschaltvorrichtungen gemäß Figur 1-11 ist dabei jeweils ein Stromschalt-Rastmechanismus vorgesehen, welcher über den Stößel 3,3' der Schalter 4,4',4'' betätigt wird, der über den Schlagknopf 2 herunter drückbar und in umgekehrter Richtung wieder hochziehbar ist.

Über eine zur Ausbildung des Stromschalt-Rastverhaltens des Schalters vorgesehene Blattfeder 17,38 wird dabei ein durch einen Druck auf den Schlagknopf eingeleiteter Abschaltvorgang selbständig bis in die untere Schalt - stellung "Aus" zu Ende geführt und werden die im Kontaktblöckchen 6 angelegten Kontaktelemente, also die unteren Kontaktelemente 8,8' gemäß Figur 1,2,4 und 8 sowie die oberen Kontaktelemente 7,7',9, welche durch das gemeinsame Kontaktteil 14',16 bzw. den Stiftkontakt 14 gemäß Figur 1,2,4 und Figur 8 gebildet werden, getrennt.

Nach Ziehen des Stößels 3,3' kann sich in der oberen Schaltstellung "Ein" schließlich die Kraft der Druckfedern 18,37 auf die Lagerung der unteren Kontaktelemente 8,8' insofern ausüben und die Kontaktierung insofern erfolgen, als der Stößel 3,3' mit einem die unteren Kontaktelemente 8,8' lagernden bügelförmigen Aufnahmeteil 20 bzw. der Kontaktbrücke 30 in Verbindung steht und diesen Teil 20,30 nach oben zieht, so daß eine Kontaktierung der oberen und unteren Kontaktelemente 8,9 und 8',9' unter Andruck durch die unteren Druckfedern 18,19,37 möglich ist. Durch die Ausbildung gemäß Fig. 2, 12 und 13 mit lediglich im Innern des Schaltergehäuses geführten Kontaktbolzen K'', K''', K'''' wird dabei verhindert, daß über das Motorkabel über dessen Anschluß 12', 12'', 12''', 12'''' ein Zug auf die Kontaktbolzen unter Aufhebung der Schaltstellung "Ein" zur Wirkung kommen kann.

Der Aufnahmeteil 20 weist dabei einen Aufnahmeraum 21 auf, durch welchen in Querrichtung die gemeinsamen Kontaktteile 14',16 der positiven und negativen Phase gemäß Figur 1 und 2 als auch der bloße Stiftkontakt 14 gemäß Figur 4 geführt sind.

Eine mögliche Anlage der Notabschaltvorrichtung an einem Elektro-Flurförderzeug ist dabei gemäß Figur 2 für die Notabschaltvorrichtung 1'' dargestellt. Bis auf den Schlagknopf 2 erfolgt dabei die Anordnung der Notabschaltvorrichtung direkt unterhalb oder seitlich unterhalb einer Haube des Batterietroges des Elektro-Flurförderzeuges, also z.B. gemäß Figur 7 seitlich hinter des Fahrersitzes im Bereich eines Querholmes außerhalb des Batterietroges 25.

Sofern die Anordnung des Schlagknopfes 2 direkt oberhalb der geschlossenen Haube des Elektro-Flurförderzeuges erfolgt, muß dabei innerhalb der Haube eine ausreichende Öffnung angelegt sein, so daß diese ohne Beseitigung der Notabschaltvorrichtung durch Hochstellung geöffnet werden kann.

In Figur 3 sowie in Figur 5 ist jeweils eine Draufsicht auf den Schlagknopf 2 und die Schaltergehäuseoberseite 11 des Schaltergehäuses 5,5' dargestellt. Man erkennt dabei die seitlich der Längsseiten 10',11' des Schaltergehäuses 5,5' sich erstreckenden Gehäuseansätze des Steckvorrichtung-Steckerteils 13 und/oder des Steckvorrichtung-Dosenteils 15, wobei in der Ausführungsform der Notabschaltvorrichtung 1 gemäß Figur 5 entsprechend Figur 4 lediglich ein Batterieanschluß in Form der Batterie-Steckvorrichtung 13 angelegt ist.

Die Vorteile einer bevorzugten Anordnung der neuerungsgemäßen Notabschaltvorrichtungen 1,1',1'' an einem Elektro-Flurförderzeug außerhalb des Batterietroges 25 ergeben sich dabei deutlich aus der Darstellung gemäß Figur 7.

Der Steckvorrichtung-Steckerteil 13 ist dabei in einer Ausnehmung eines hinteren Querträgers 24 des Elektro-Flurförderzeuges derart angeordnet, daß der Steckvorrichtung-Steckerteil 13 bündig bis seitlich des Anfanges des Batterietroges 25 ragt. Es kann insofern die Batterie-Steckdose des Anschlußkabels des im Batterietrog 25 befindlichen Satzes der Antriebsbatterien in einfachster Weise unmittelbar an einer fest vorgegebenen Stelle außerhalb des Batterietroges in den Steckvorrichtung-Steckerteil 13 der Notabschaltvorrichtung angebracht werden.

Es ist insofern möglich, die Anschlußkabel der Antriebsbatterien in der Länge kurz zu halten, wobei die Kontaktierung der Batterie-Steckdose außerhalb des Batterietroges erfolgt. Es ist insofern keine Steckvorrichtung zum Anschluß der Batterien innerhalb des Batterietroges gegeben, wobei im Gegensatz zur bisherigen Praxis erhebliche mechanische Belastungen der Anschlußkabel und der bisher zum Anschluß der Antriebsbatterien dort zusätzlich verwendeten Geräte-Steckvorrichtung einschließlich der dabei zur Wirkung kommenden chemischen Belastungen vermieden werden.

Durch die Anordnung der Notabschaltvorrichtung unmittelbar am Heck des Elektro-Flurförderzeuges und dessen zur Heckseite vorragendes Steckvorrichtung-Dosenteil für den Ladegeräteanschluß ist es dabei in einfachster Weise möglich, von der Rückseite des Elektro-Flurförderzeuges das Ladegerät an die Antriebsbatterien anzuschließen.

Zum Laden der Batterien entfällt somit eine Verschwenkung der Haube oder eine Entnahme der Batterietroges mit den Batterien.

In der Ausführungsform der Notabschaltvorrichtung 1''' gemäß Figur 8-11 ist dabei statt des doppel-U-förmigen Aufnahmeteils 20 zur Lagerung der unteren Kontaktelemente 8,8' die im unteren Teil des Schaltergehäuses 5'' höhenverschiebliche Kontaktbrücke 30 vorgesehen.

Die oberen Kontaktelemente 7,7' sind dabei an der Unterseite der quer durch das Schaltergehäuse 5'' geführten Stiftkontakte 14 des Kombi-Steckvorrichtung-Steckerteils 13 angelegt. Die Stiftkontakte 14 und damit die oberen Kontaktelemente 7,7' sind dabei fest in Längsaufnahmen 33,34 gelagert, welche sich nach unten im Bereich zu den unteren Kontaktelementen 8,8' öffnen.

Seitlich rechts und links außen zu diesen Längsaufnahmen 33, 34 sind dabei Längsbohrungen 29,29' zur Lagerung von Dauermagneten in der Innenwandung des Schaltergehäuses angelegt, wobei die Längsaufnahmen 33,34 und die Längsbohrungen 29,29' in nach innen mittig vorstehende Wandungsvorsprünge 31,32 angelegt sind.

In der verbleibenden mittigen Öffnung zwischen diesen Wandungsvorsprüngen 31,32 ist dabei der Stößel 3' mit seinem unteren Ende längsbeweglich geführt, wobei das untere Stößelende einteilig in die Oberseite der Kontaktbrücke 30 übergeht und dabei dort mittig zwischen den beiden unteren nach außen vorstehenden Kontaktbolzen K' zu liegen kommt, an welche das Kabel für den Motoranschluß anzuschließen ist.

An der Unterseite der Kontaktbrücke 30 ist dabei zwischen den Kontaktbolzen K' mittig ein nach unten vorstehender Führungsbolzen 39 angelegt, welcher als Führung der in einer unteren Aufnahme 40 der Schaltergehäusewandung gelagerten Druckfeder 37 dient.

Zur Unterdrückung der Ausbildung eines Lichtbogens beim Kontaktieren und Trennen der unteren und oberen Kontaktelemente ist dabei jeweils ein Permanentmagnet 35,36 in den Längsbohrungen 29,29' seitlich zu den oberen Kontaktelementen 7,7' angelegt. Als Schaltergehäusematerial ist ein die Dauermagnete nicht abschirmender Kunststoff gewählt. Die Kraftlinien E der Permanentmagnete 35,36 sind dabei im Bereich der sich schlitzförmig öffnenden und schließenden oberen und unteren Kontaktelemente 7,8;7',8' senkrecht zu deren Verstellrichtung geführt, wobei insofern nach der 3-Finger-Regel für die auf einen stromdurchflossenen Leiter im Magnetfeld wirkende Kraft auf die im sich öffnenden oder schließenden Spalt zwischen den Kontaktelementen befindlichen Ladungsträger (Ionen, Elektronen) eine Kraft wirkt, die die Ladungsträger seitlich aus dem Spalt in eine Richtung führt, die senkrecht zur Bewegungsrichtung und zu den magnetischen Feldlinien wirkt. Ein Lichtbogen wird somit seitlich abgelenkt.

Da im Spalt zwischen den gegenüberliegenden Kontaktelementen eine Verarmung an Ladungsträgern auftritt, wird die Ausbildung eines Lichtbogens zwischen diesen zudem unterbrochen oder verhindert.

Zur Ableitung und Unterdrückung des Lichtbogens dienen im übrigen auch in der Wandung des Schaltergehäuses im Bereich der Kontaktelemente angelegte Belüftungsschlitze 41,42,43, welche sowohl in den Schmalseiten 44 als auch in den Längsseiten 45 des Schaltergehäuses 5'' angelegt sind.

Durch diese Belüftungsschlitze kann dabei ein abgelenkter Lichtbogen auftreten.

Um eine leichtere Bedienung der gemäß Figur 7 im Heck eines Elektro-Flurförderzeuges anzuordnenden Notabschaltvorrichtung zu erreichen, erfolgt dabei deren Befestigung gemäß Figur 9,10 und 11 hinter dem Fahrersitz in einem spitzen Winkel (α) zur Ebene der Fahrzeug- bzw. Batterietroghaube in Richtung zum Fahrer.

Dieser kann durch einen nach hinten gestreckten Arm bequem in schräger Richtung den Schlagknopf 2 der Notabschaltvorrichtung 1''' niederdrücken oder ziehen.

Aus diesem Grund sind die in der Waagerechten zu montierenden Halte- und Befestigungsflansche 28 in einem spitzen Winkel (α) gegenüber den Längsseiten 45 des Schaltergehäuses 5'' angeordnet.

In Figur 12 und 13 sind zwei Notabschaltvorrichtungen 1'''' und 1''''' dargestellt, welche sich gegenüber denen der Figur 8 nur bezüglich der Anschlüsse 12'' und der Ausbildung der Kontaktbolzen K' und des unteren Bereichs des Schaltergehäuses unterscheiden.

So sind statt der verschieblich durch Längsbohrungen an der unteren Schaltergehäuseseite 10 nach außen geführten Kontaktbolzen K' in der Ausführungsform gemäß Figur 12 jeweils seitlich rechts und links der Kontaktbrücke 30 Kontaktbolzen K'' angelegt, welche in Längsbohrungen von nach außen durch die untere Wandung des Schaltergehäuses vorstehende Kontakthülsen 50,51 verschieblich gelagert sind, die als solche in der Wandung an der unteren Schaltergehäuseseite 10 fest eingelassen sind.

Die Kontakthülsen 50,51 weisen dabei an einem äußeren Abschnitt Anschlüsse 12''' für das Motorkabel und an ihrem oberhalb in der unteren Gehäusewandung gelagerten Abschnitt die in Form von Sackbohrungen sich nach oben zu den Kontaktbolzen K'' öffnenden Längsbohrungen auf. Sie sind dabei in ihrer Länge und ihrem Innendurchmesser der Größe der Kontaktbolzen K'' und der zur Schaltung notwendigen Längsverschiebung der die Kontaktbolzen K'' tragenden Kontaktbrücke 30 angepaßt. Insofern sind die Kontaktbolzen in den Kontakthülsen unter elektrischer Kontaktierung frei verschieblich, wobei kein auf das Motorkabel wirkender äußerer Zug die fest in der Wandung des Schaltergehäuses 5''' gelagerten Kontakthülsen 50,51 und somit die in diesen verschieblichen Kontaktbolzen K'' verschieben kann. Die Verankerung der Kontakthülsen 50,51 erfolgt dabei über einen von diesen radial nach außen vorstehenden Lagerbund 52. Dieser greift dabei in eine seitliche nutförmige umlaufende Ausnehmung der an der unteren Gehäuseseite angelegten Durchgangsbohrung zur Lagerung der Kontakthülsen.

Insofern ist sichergestellt, daß in der oberen Schaltstellung "Ein" eine über das Elektrokabel auf die Anschlüsse 12''' wirkende Kraft die geschlossene Schalterstellung plötzlich nicht aufhebt und dabei unter Trennung der Kontakte 7,8 die Kontaktbrücke 30 nicht nach unten zieht.

Allein durch Wahl einer mit einer großen Federkonstanten bemessenen Druckfeder 37, welche die Kontaktbrücke 30 nach oben in die Schaltstellung "Ein" drückt, läßt sich dabei die Wirkung einer äußeren Kraft nicht zufriedenstellend ausschließen, da eine derartige, über das Motorkabel wirkende Zugkraft an sich beliebig groß sein kann und zudem bei Niederdrücken des Schlagknopfes 2 durch die Rast-Blattfeder 38 der Schalter entgegen der Kraft der Druckfeder 37 schlagartig in die Schaltstellung "Aus" bringbar sein muß, die Druckfeder also kleiner sein muß.

Ansonsten ist der Schalter 4''' und das Schaltergehäuse 5''' der Notabschaltvorrichtung 1'''' wie der Schalter 4'' und das Schaltergehäuse 5'' der Notabschaltvorrichtung 1''' der Figur 8 ausgebildet. Insbesondere sind wie in Figur 8 Dauermagnete 29,29' zur Verhinderung der Löschung eines Schaltfunkens angelegt.

Eine weitere in Figur 13 dargestellte Notabschaltvorrichtung 1''''' entspricht dabei im wesentlichen dem Aufbau der Notabschaltvorrichtung 1'''' gemäß Figur 12, wobei die wiederum innerhalb des Schaltergehäuses 5'''' frei verschieblich geführten Kontaktbolzen K'''' aber nicht innerhalb von durch die untere Gehäusewandung geführter Kontakthülsen verschiebbar sind, sondern als Schiebekontakte K'''' an der Außenseite von Kontaktstücken 46,47, welche statt der Kontakthülsen durch die untere Gehäusewandung geführt sind.

Die Kontaktstücke 46,47 sind dabei dort ebenfalls durch einen radial vorstehenden Lagerbund 52' fest in axialer und radialer Richtung gelagert, so daß diese ebenfalls nicht durch einen außen auf ihre Anschlüsse 12'''' einwirkende Kraft verschiebbar sind und somit die Schaltstellung des Schalters bzw. die Stellung der Kontaktbrücke 30 nicht durch eine äußere auf das Motorkabel wirkende Kraft verstellbar ist. Die Kontakthülsen 50,51 und die Kontaktstücke 46,47 weisen dabei an ihrem äußeren Abschnitt zur Bildung der Anschlüsse 12''' bzw. 12'''' übliche Anschlußmittel für die Leiter eines Motorkabels auf, durch die die Leiter schraubbar, festklemmbar oder festlötbar sind.

Die Schiebekontakte K'''' sind dabei jeweils seitlich am linken und rechten Endabschnitt der Kontaktbrücke 30 über eine Gelenkverbindung in Richtung der Kontaktstücke 46,47 verschwenkbar gelagert. Sie weisen dabei zwei um 90° zueinander abgewinkelte Schenkelabschnitte 56,57 auf. Mit den äußeren Stirnflächen 49,49' und den Kontakten 8,8' liegen diese dabei gegen die Unterseite der Stiftkontakte 14 und die Außenseite der Kontaktstücke 46,47 in der Schaltstellung "Ein" an. Die Stirnflächen 49,49' sind dabei entsprechend der Außenseiten der Kontaktstücke 46,47 ausgebildet, so daß diese Flächen genau abgestimmte Paßflächen bilden und somit die Schiebekontakte mit Längsverschiebung der Kontaktbrücke 30 auf diesen leicht verschiebbar sind.

Die Stiftkontakte 14 weisen dabei an ihrer Unterseite 55' ebenfalls eine plane Paßfläche auf, wobei diese aber gegenüber den Kontaktflächen der Kontakte 8,8' der Stiftkontakte K'''' schräg angestellt sind. Insofern wird erreicht, daß mit einer Bewegung der Kontaktbrücke nach oben die abgewinkelten drehbaren Schiebekontakte nach außen verschwenkt und ein hoher Gegendruck zwischen den Schiebekontakten und der äußeren Paßfläche der Kontaktstücke 46,47 aufgebaut wird.

Während in Figur 1-6 jeweils Notabschaltvorrichtungen mit am Gehäuse angelegten Batterie-Steckerteil und Ladegeräte-Dosenteil gezeigt sind, welche einen entsprechend Euro-Norm EN 1175 oder DIN-Norm 43589 ausgebildeten Steckansatz oder Schutzkragen aufweisen und dabei Hauptkontaktstifte und Hauptkontakthülsen entsprechend derartiger normierter Steckvorrichtungen verwenden, ist dabei auch die Ausbildung dieser Gehäuseansätze 13,15 sowie der Stiftkontakte 14,14' und Buchsenkontakte 16 bzw. des gemeinsamen Kontaktteils 14',16 gemäß den Hauptkontakten und Gehäuseansätzen von Flachkontaktsteckern möglich.

In Figur 14 sind dabei zwei zu übersteckende Flachkontaktstecker 66 wiedergegeben, welche trotz Verwendung als Dose bzw. Stecker baugleich sind und lediglich gegeneinander um 180° gedreht sind. Sie weisen dabei jeweils die außerhalb vereinzelt dargestellten Hauptkontakte 62 in Form von Flachkontakten auf sowie einen ebenfalls identischen Dosengehäuseansatz 60 bzw. Steckergehäuseansatz 61.

Die Gehäuseansätze 13,15 sind dabei zum Anschluß für Flachkontaktstecker 66 als derartige Dosen- bzw. Steckergehäuseansätze auszubilden, wobei auf das übrige Teil des Leergehäuses 63 zu verzichten ist.

Dabei sind dann in diesen Hauptkontakte in Form von Flachkontakten 62 anzulegen.

Derartige Flachkontaktstecker werden dabei von der Firma REMA Lipprandt GmbH & Co. KG angeboten (Nr. SBE 160, SBE 320, SBX 175, SBX 350, SB 50, SB 175, SB 350).

In Figur 15 sind die wesentlichen Bestandteile einer insbesondere als Lade-Steckvorrichtung für Batterie-Elektro-Flurförderzeuge zu verwendenden mehrpoligen Geräte-Steckvorrichtung wiedergegeben, bestehend aus einer Geräte-Steckdose 67 und einem Gerätestecker 68 mit einer integrierten, zusätzlichen Luft-Steckvorrichtung für ein Lufttransportsystem, wobei durch das Zusammenfügen von Gerätesteckdose und Gerätestecker die elektrische Verbindung der in ihnen paarweise angeordneten Hauptkontaktstifte 69 mit den Hauptkontakthülsen 70 hergestellt wird.

Beim Zusammenfügen der als Batterie-Lade-Steckvorrichtung zu verwendenden Geräte-Steckvorrichtung wird dabei zugleich automatisch mit der elektrischen Verbindung zwischen Batterie und Ladestation auch eine Verbindung für ein Lufttransportsystem zwischen Batterie und Ladestation hergestellt, so daß beispielsweise während des Ladevorganges an der Batterie ein Abführen von Gasen, Nachfüllen von Säuren und/oder anderen Batterieflüssigkeiten, oder bei wartungsfreien Batterien ein Umwälzen von Gelflüssigkeit mit Druckluft oder einem anderen Medium erfolgen oder insbesondere bei nicht wartungsfreien Batterien, wie Naßbatterien, deren Elektrolytflüssigkeit während des Ladevorganges in Zwangsbewegung durch zuzuführende Druckluft versetzt werden kann.

Der links wiedergegebene Gerätestecker 68 und die rechts wiedergegebene Gerätesteckdose 67 weist zwei Hautkontaktstifte 69 bzw. 2 Hauptkontakthülsen 70 auf sowie ein Kontaktaufnahmeteil 71 mit Steckansatz 72 der Gerätesteckdose, ein Kontaktaufnahmeteil 73 mit Schutzkragen 74 des Gerätesteckers, die beiden über Paßflächen übersteckbaren Codierstifte 75 der Gerätesteckdose und des Gerätesteckers, Zugentlastungsschellen 76 zur Führung der elektrischen Zuleitung sowie des Luftschlauches, welcher an die Luftkontakte 77 der Geräte-Steckvorrichtung anzuschließen ist, einen Griff für die Gerätesteckdose oder den Gerätestecker zu deren besseren Handhabung, die Luftkontaktteile 77 des Gerätesteckers der Gerätesteckdose,die gemäß Norm mittig zu den Hauptkontakten angelegten Pilotkontakthülsen 78 und die Pilotkontaktstifte 79, einen Verschlußteil 81 für die Gerätesteckdose sowie einem Verschlußteil 82 für die Gerätestecker, - jeweils mit einer unteren Arretierplatte 83,84.

An dem Steckansatz der Gerätesteckdose erkennt man dabei auf der äußeren dargestellten Steckfläche neben den Öffnungen der Aufnahmen 85 für die Hauptkontakthülsen die Aufnahmen 86 zwischen diesen für die nach Norm anzulegenden Pilotkontakthülsen 78.

Der Kontaktstift 69 des Gerätesteckers weist dabei an seinem linken äußeren Abschnitt den hülsenförmigen Stiftabschnitt auf, in dessen sich nach außen öffnende Sackbohrung das Ende des zu kontaktierenden Leiters anzubringen ist. Ferner erkennt man den nach außen mit einer Anschlagschulter vorragenden Kragen, welcher zur Befestigung über Ausnehmungen der Arretierplatte 17' in zwei beabstandeten Kragenabschnitte unterteilt ist.

An diesem Kragen schließt sich dann der vordere Stiftabschnitt an, welcher in der hülsenförmigen vorderen Kontaktstiftlängsaufnahme der Hauptkontakthülse 70 zur Übersteckung anzubringen ist.

Die Kontaktstiftlängsaufnahme wird dabei wie in Figur 15 erkenntlich aus unterbrochenen federelastischen Wandungsabschnitten gebildet, welche in ihrem vorderen Endabschnitt durch einen außen anliegenden Federring zusammengehalten werden.

An die Kontaktstiftlängsaufnahme schließt sich dabei wie bei den Kontaktstiften ein Kragen mit einem hülsenförmigen Stiftabschnitt an.

Die Arretierplatten 83,84 gehen dabei senkrecht von der Unterseite der Verschlußteile 80,81 der Gerätesteckdose bzw. des Gerätesteckers aus, wobei diese Verschlußteile jeweils zwei beabstandete Rippen aufweisen, welche an einer Lagerung des Codierstiftes im Innern des Kontaktaufnahmeteils aufschnappen.

Über die sich öffnende Seite der Kontaktaufnahmeteile 71,73 lassen sich dabei die Verschlußteile 80,81 leicht wieder aus dieser Einrastung ausdrücken.

Eine zusätzliche Halterung der Verschlußteile 80,81 erfolgt dabei durch den mittig durch die Kontaktaufnahmeteile geführten Codierstift 75, für welchen am oberen Teil der Arretierplatte eine Ausnehmung angelegt ist, welche entsprechend der Formgebung des Codierstiftes eine sechseckige Querschnittsöffnung aufweist.

### Bezugsziffernliste

- Notabschaltvorrichtung: 1, 1', 1'', 1''',
1'''', 1'''''
- Schlagknopf: 2
- Stößel: 3, 3'
- Schalter: 4, 4', 4'', 4''',
4''''
- Schaltergehäuse: 5, 5', 5'', 5''',
5''''
- Kontaktblöckchen: 6
- Kontaktelemente (obere): 7, 9, 7'
- Kontaktelemente (untere): 8, 8'
- untere Schaltergehäuseseite: 10
- linke Schaltergehäuse-Längsseite: 10'
- obere Schaltergehäuseseite: 11
- rechte Schaltergehäuse-Längsseite: 11'
- Anschluß für Motorkabel: 12, 12', 12'',
12''', 12''''
- Kombisteckvorrichtung-Steckerteil: 13
- Stiftkontakt: 14, 14'
- Kombisteckvorrichtung-Dosenteil: 15
- Buchsenkontakt: 16
- gemeinsames Kontaktteil: 14', 16
- Blattfeder für Sprungschalt- Rastverhalten: 17
- Druckfeder zur Kontaktgebung: 18, 19
- Aufnahmeteil: 20
- Aufnahmeraum: 21
- Innenwandung: 22
- Gabelstapler: 23
- hinterer Querträger: 24
- Batterietrog: 25
- Ausnehmung des Querträgers: 26
- Mittellängsachse: 27
- Halte- und Befestigungsflansch: 28
- Dauermagnet: 29, 29'
- Feldrichtung: E
- Kontaktbrücke: 30
- Wandungsvorsprünge: 31, 32
- Längsaufnahme in Wandungsvor- sprüngen: 33, 34
- Längsbohrung für Dauermagnet: 35, 36
- Druckfeder: 37
- Rast-Blattfeder: 38
- Führungsbolzen: 39
- Aufnahme: 40
- Belüftungsschlitze: 41, 42, 43
- Schmalseiten (Längsseiten): 44, 45
- Kontaktbolzen: K, K', K" , K''',
K''''
- Kontaktstücke: 46, 47
- Gelenkverbindung: 48
- Kontaktfläche, äußere: 49
- Kontakthülsen: 50, 51
- Lagerbund: 52
- Lagerflansch: 53
- Kontakthülse: 54
- Kontakt- und Lagerplatte: 55'
- Unterseite der Stiftkontakte (14): 55
- Schenkelabschnitte: 56, 57
- Anschlußmittel: 58
- Anschlußmittel: 59
- Dosengehäuseansatz (Flachkontakt- stecker): 60
- Steckergehäuseansatz (Flachkontakt- stecker): 61
- Hauptkontakte: 62
- Leergehäuse mit Luftkupplung: 63
- Fluidleitung: 64
- Griff: 65
- Flachkontaktstecker: 66
- Geräte-Steckdose: 67
- Geräte-Stecker: 68
- Hauptkontakthülsen: 70
- Kontaktaufnahmeteil: 71
- Steckansatz: 72
- Kontaktaufnahmeteil: 73
- Schutzkragen: 74
- Codierstifte: 75
- Zugentlastungsschellen: 76
- Luftkontakte: 77
- Pilotkontakthülsen: 78
- Pilotkontaktstifte: 79
- -: 80
- Verschlußteil: 81
- Verschlußteil: 82
- Arretierplatte: 83
- Arretierplatte: 84
- Aufnahmen für Hauptkontakthülsen: 85
- Aufnahmen für Pilotkontakthülsen: 86

## Patentansprüche

1. Notabschaltvorrichtung (1,1',1'',1''', 1'''', 1'''''), insbesondere zum Trennen der Verbindung zwischen Elektromotor oder dessen Steuereinheit und den Antriebsbatterien für diesen bei Elektro-Flurförderzeugen, bestehend aus einem Schlagknopf (2) für eine Not-Aus-Taste, einem Stößel (3,3') und einem Schalter (4, 4', 4'', 4''', 4'''') mit mindestens einem im Schaltergehäuse (5, 5', 5'', 5''', 5'''') angelegten Kontaktblöckchen (6) aus Kontaktelementen (7,8,9;7', 8'), wobei die sofortige, direkte Unterbrechung des Stromkreises bei einem Schlag auf den Schlagknopf (2) durch einen Sprungschaltmechanismus (17,38) des Schalters (4,4',4'',4''', 4'''') erfolgt und ein eingeleiteter Abschaltvorgang selbsttätig zu Ende geführt wird und der Schalter (4,4',4'',4''',4'''') aus dieser Schaltstellung "Aus" durch Ziehen des Schlagknopfes (2) in eine die Stromverbindung herstellende Schaltstellung "Ein" bringbar ist,
**dadurch gekennzeichnet, daß**
auf der unteren Schaltergehäuseseite (10), welche der oberen, den Schlagknopf (2) aufnehmenden Schaltergehäuseseite (11) entgegengesetzt ist, ein Anschluß (12, 12',12'', 12''', 12'''') für ein Elektromotorkabel angelegt ist und seitlich des Schaltergehäuses (5, 5', 5'', 5''', 5'''') ein zweipoliger Batterieanschluß mit integriertem Steckvorrichtung-Steckerteil (13) zum Anschluß einer Geräte-Steckdose, wobei zumindest ein Stiftkontakt (14,14') dieses Steckerteils (13) durch die Betätigung des Schlagknopfes (2) und die damit erfolgende Verstellung des oder der Kontaktelemente (7, 8, 9; 7',8') des oder der Kontaktblöckchen (6) entsprechend der Ein-oder Ausstellung des Schalters (4, 4', 4'',4''', 4'''') mit dem seiner Phase entsprechenden Kontakt für den Anschluß (12, 12', 12'', 12''', 12'''') des Elektromotorkabels in Verbindung steht oder getrennt ist.

2. Notabschaltvorrichtung nach Patentanspruch 1,
**dadurch gekennzeichnet, daß**
seitlich des Schaltergehäuses (5') an der zur Anlage des Steckvorrichtung-Steckerteils (13) entgegengesetzten Seite des Schaltergehäuses (5')ein Steckvorrichtung-Dosenteil (15) für einen Ladegeräteanschluß angelegt ist, wobei die Kontakte des Steckvorrichtungs-Steckerteils mit den Kontakten entsprechender Polarität des Steckvorrichtungs-Dostenteils verbunden sind.

3. Notabschaltvorrichtung nach Patentanspruch 1 oder 2,
**dadurch gekennzeichnet, daß**
das Schaltergehäuse (5, 5', 5'', 5''', 5'''') und das Steckvorrichtung-Steckerteil (13) und/oder das Steckvorrichtung-Dosenteil (15) als kombiniertes mehrteiliges Gehäuse ausgebildet sind.

4. Notabschaltvorrichtung nach Patentanspruch 2,
**dadurch gekennzeichnet, daß**
das Gehäuse (5,5',5'',5''',5'''') einteilig ausgebildet ist.

5. Notabschaltvorrichtung nach einem der Patentansprüche 1-4,
**dadurch gekennzeichnet, daß**
die Ausbildung des Steckvorrichtung-Steckerteils (13) und/oder des Steckvorrichtung-Dosenteils (15) jeweils mit einem Dosen (60)- oder Steckergehäuseansatz (61) gemäß Flachkontaktsteckern (66) zweipoliger Geräte-Steckvorrichtungen für Elektro-Flurförderzeuge sowie deren Kontakte und Steckgesicht erfolgt.

6. Notabschaltvorrichtung nach einem der Patentansprüche 1-4,
**dadurch gekennzeichnet, daß**
die Ausbildung des Steckvorrichtung-Steckerteils (13) und/oder des Steckvorrichtung-Dosenteils (15) jeweils gemäß dem Dosen-/Steckergehäuseansatz, den Kontakten und dem Steckgesicht von Steckvorrichtungen für Elektro-Flurförderzeuge nach Euro-Norm und/oder DIN-Norm 43589 erfolgt.

7. Notabschaltvorrichtung nach einem der Patentansprüche 2-6 oder 6,
**dadurch gekennzeichnet, daß**
jeweils ein Stiftkontakt (14') des Batterieanschlusses und ein Buchsenkontakt (16) des Ladegeräteanschlusses durch ein gemeinsames Kontaktteil (14',16) gebildet sind, welches seitlich rechts oder links des Stößels (3) oberhalb des unteren Kontaktelementes (8) des Kontaktblöckchens (6) geführt ist, wobei an der einen Seite des gemeinsamen Kontaktteils (14',16) ein Stiftkontakt (14') des Steckerteils (13) für den Batterieanschluß und an der anderen Seite ein Buchsenkontakt (16) des Dosenteils (15) des Ladegeräteanschlusses angeformt ist.

8. Notabschaltvorrichtung nach einem der Patentansprüche 1 - 7,
**dadurch gekennzeichnet, daß**
zur Trennung sowohl der positiven als auch der negativen Phase der Antriebsbatterien von den entsprechenden Anschlüssen (12, 12', 12'', 12''', 12'''') des Elektromotors oder dessen Steuereinheit jeweils für beide Phasen jeweils ein Kontaktblöckchen mit ein/ausschaltbaren Kontaktelementen (7, 8, 9; 7', 8') im Schalter (4, 4', 4'', 4''', 4'''') angelegt sind.

9. Notabschaltvorrichtung nach Patentanspruch 8,
**dadurch gekennzeichnet, daß**
der Stößel (3,3') sich mittig zwischen den rechten und linken Kontaktelementen der positiven bzw. negativen Phase des Schalters (4, 4', 4'', 4''', 4'''') erstreckt und über eine Kontaktbrücke (30) oder mindestens einen bügelförmigen Aufnahmeteil (20) und mit den dort auf der äußeren oder inneren Oberseite angeordneten beiden unteren Kontaktelemente (8, 8') gegen die beiden oberen Kontaktelemente (7, 7', 9) zur Betätigung des Schalters (4, 4', 4'', 4''', 4'''') in Kontakt bringbar ist.

10. Notabschaltvorrichtung nach einem der Patentansprüche 1 - 9,
**dadurch gekennzeichnet, daß**
zumindest die unteren Kontaktelemente (8, 8') und die oder der Stößel (3, 3') durch Vorspannung einer Rastfeder (17, 38) derart beaufschlagt sind, daß bei Notausschaltung des Schalters (4, 4', 4'', 4''', 4'''') der oder die Stößel (3, 3') unbeeinflußbar von außen nach unten bewegt und die unteren von den oberen Kontaktelementen getrennt werden, wobei das oder die unteren Kontaktelemente (8, 8') des Motoranschlusses (12, 12', 12'', 12''', 12'''') bei Ziehen des Schlagknopfes und Verstellung der Rastfeder (17,38) durch die Gegenkraft einer zusätzlichen Druckfeder (18, 19, 37) in die Schließstellung der Kontaktelemente (7, 8, 9; 7', 8') drückbar sind.

11. Notabschaltvorrichtung nach Patentanspruch 9 oder 10,
**dadurch gekennzeichnet, daß**
die Kontaktbrücke (30) oder das Aufnahmeteil (20) zur Lagerung der beiden zu verstellenden Kontaktelemente (8,8') aus einem quer durch das Schaltergehäuse sich erstreckenden und längs in diesem nach unten verschieblichen Lagerteil gebildet ist, wobei das Aufnahmeteil (20) zumindest einen sich nach unten oder mittig öffnenden Aufnahmeraum (21) aufweist, in dem die beabstandeten gemeinsamen Kontaktteile (7,7') der positiven und/oder negativen Phase fest angeordnet angelegt sind, und daß die untere Innenwandung (22) des Aufnahmeraums (21) oder die Oberseite der Kontaktbrücke (30) ein oder beide Kontaktelemente (8,8') für den Anschluß der positiven und/oder negativen Phase des Motorkabelanschlusses (12) trägt, wobei diese Kontaktelemente (8, 8') bei Einschaltung des Schalters (4,4', 4'',4''',4'''') mit dem entsprechenden Kontaktteil des Batterie- oder Ladegeräteanschlusses direkt oder indirekt in elektrisch leitenden Kontakt bringbar sind.

12. Notabschaltvorrichtung nach Patentanspruch 11,
**dadurch gekennzeichnet, daß** die an der unteren Innenwandung (22) des Aufnahmeraumes (21) angelegten Kontaktelemente (8) mit der Außenseite entsprechender gemeinsamer Kontaktteile (14',16) des Batterie- und Ladegeräteanschlusses (negativer bzw. positiver Phase) unmittelbar in elektrisch leitenden Kontakt bringbar sind.

13. Notabschaltvorrichtung nach einem oder mehreren der Patentansprüche 1-12,
**dadurch gekennzeichnet, daß**
das Schaltergehäuse (5'') der Notabschaltvorrichtung (1''') einen Halte- und Befestigungsflansch (28) aufweist,der gegenüber der durch den Schlagknopf (2) und den Stößel (3') parallel zu den Schaltergehäuse-Längsseiten (45) geführten Ebene unter einem spitzen Winkel (α) abgewinkelt ist.

14. Notabschaltvorrichtung nach einem der Patentansprüche 1 - 13,
**dadurch gekennzeichnet, daß**
zur Löschung eines sich bei Aus- und Einschaltung der Notabschaltvorrichtung in einem Spalt zwischen den zu verbindenden oder zu trennenden Kontaktelementen (7,8;7', 8') ausbildenden Entladungsfunkens seitlich neben zumindest eines der zu kontaktierenden oder zu trennenden Kontakelemente (7,8;7',8') ein Dauermagnet (29,29') mit seiner Feldrichtung (E) im wesentlichen senkrecht zur Bewegungsrichtung der beweglichen Kontaktelemente (8,8') oder der diese tragenden Kontaktbrücke (30) oder des Aufnahmeteils (20) angelegt ist, wobei auf die Ladungsträger eines sich ausbildenden Entladungsfunkens oder Lichtbogens eine Kraft wirkt, die im wesentlichen senkrecht zum Stellweg der mit den gegenüberliegenden fest angeordneten Kontaktelementen (7,7') zu kontaktierenden beweglichen Kontaktelemente (8,8') aus dem Spalt weg gerichtet ist.

15. Notabschaltvorrichtung nach Patentanspruch 14,
**dadurch gekennzeichnet, daß**
die Dauermagnete (29,29') längs der gesamten zu kontaktierenden Kontaktflächenabschnitte der festen Kontaktelemente (7,7') sich erstrecken.

16. Notabschaltvorrichtung nach Patentanspruch 15,
**dadurch gekennzeichnet, daß**
die Dauermagnete (29,29') an den äußeren Seiten seitlich neben den elektrisch zu kontaktierenden, fest angelegten Kontaktelementen (7,7') angelegt sind.

17. Notabschaltvorrichtung nach einem der Patentansprüche 15 oder 16,
**dadurch gekennzeichnet, daß**
in radial nach innen in das Schaltergehäuse (5'',5''', 5" ") der Notabschaltvorrichtung (1''', 1'''', 1''''') beidseitig vorstehenden Wandungsvorsprüngen (31, 32) jeweils eine sich nach unten zu den beweglichen Kontaktelementen (8, 8') öffnende, untere Aufnahme (33, 34) für die fest anzulegenden Kontaktelemente (7, 7') angelegt ist und seitlich davon zur äußeren Gehäusewandung eine Aufnahme (35, 36) zur Lagerung zumindest eines der Dauermagnete (29, 29').

18. Notabschaltvorrichtung nach einem der Patentansprüche 15 - 17,
**dadurch gekennzeichnet, daß**
die Kontaktelemente (7,8;7',8') als Längskontakte ausgebildet sind und sich seitlich auf oder oberhalb der Kontaktbrücke (30) oder der Innenwandung (22) des Aufnahmeteils (20) quer zu dieser erstrecken und daß die Aufnahmen (35,36) für die Dauermagnete (29,29') seitlich parallel dazu verlaufend angelegt sind.

19. Notabschaltvorrichtung nach Patentanspruch 18,
**dadurch gekennzeichnet, daß**
die Aufnahmen (35,36) für die Dauermagnete (29,29') als in Umfangsrichtung geschlossene Längsbohrungen angelegt sind.

20. Notabschaltvorrichtung nach einem der Patentansprüche 14-19,
**dadurch gekennzeichnet, daß**
in den Wandungen des Schaltergehäuses (4'') an den Schmalseiten (44) und Längsseiten (45) Belüftungsschlitze (41,42, 43) angelegt sind.

21. Notabschaltvorrichtung nach Patentanspruch 20,
**dadurch gekennzeichnet, daß**
die Belüftungsschlitze (41,42,43) in einer Höhe im Bereich unterhalb der fest angeordneten Kontaktelemente (7,7') in der Gehäusewandung angelegt sind.

22. Notabschaltvorrichtung nach einem der Patentansprüche 1 - 21,
**dadurch gekennzeichnet, daß**
der oder die Anschlüsse (12, 12', 12'', 12''', 12'''') für die negative und/oder positive Leitungsphase des Elektromotorkabels durch in den Bereich der unteren Schaltergehäuseseite (10) geführte Kontaktbolzen (K, K', K'',K''',K'''') der Kontaktelemente (8, 8') der Kontaktblöckchen (6) gebildet sind.

23. Notabschaltvorrichtung nach Patentanspruch 22,
**dadurch gekennzeichnet, daß** der Kontaktbolzen (K, K', K'', K''', K'''') von einem Lagerflansch (53) oder der Kontaktbrücke (30) nach unten absteht und daß auf der gegenüberliegenden Oberseite das untere Kontaktelement (8, 8') des Kontaktblöckchens (6) des Schalters (4, 4', 4'', 4''', 4'''') angelegt ist, und daß zwischen der Unterseite und der Innenwandung an der unteren Schaltergehäuseseite (10) zur Verstärkung der Kontaktgebung bei gezogenem Schlagknopf (2) (Schaltstellung "Ein") eine Druckfeder (18, 19, 40) gelagert ist.

24. Notabschaltvorrichtung nach Patentanspruch 22 oder 23,
**dadurch gekennzeichnet, daß**
das untere Ende der Kontaktbolzen (K, K') Anschlußmittel (58,59) für einen Kabelschuh oder eine Kabellitze aufweist oder daß der Kontaktbolzen (K'', K''', K'''') mit derartigen Anschlußmitteln elektrisch kontaktierbar ist.

25. Notabschaltvorrichtung nach Patentanspruch 23 oder 24,
**dadurch gekennzeichnet, daß**
der Lagerflansch (53) am oberen Ende des Kontaktbolzens (K, K') unter Bildung einer Anschlagschulter für die Druckfeder (18, 19) nach außen radial vorsteht.

26. Notabschaltvorrichtung nach einem der Patentansprüche 9 - 24,
**dadurch gekennzeichnet, daß**
als Lagerung der Druckfeder (37) bei der Anlage einer Kontaktbrücke (30) an deren Unterseite mittig ein Führungsbolzen (39) angelegt ist, und daß ferner in der Innenwandung an der unteren Schaltergehäuseseite (10) eine Aufnahme (40) in Form einer Längsführungsbohrung für den Führungsbolzen (39) und der von diesem geführten Druckfeder (37) angelegt ist.

27. Notabschaltvorrichtung nach einem der Patentansprüche 22-26,
**dadurch gekennzeichnet, daß** das untere Gehäuseteil des Schaltergehäuses (5, 5', 5'',5''', 5'''') mit den Kontaktbolzen (K, K', K'', K''', K'''') und deren Kontaktbrücke (30) und/oder den Lagerflanschen (53) eine Schiebeführung bildet, wobei die Kontaktbolzen durch Bohrungen in der Wandung an der unteren Schaltergehäuseseite (10) geführt oder in derart nach außen fest vorstehenden Kontakthülsen (50, 51; 54) längsverschieblich gelagert sind.

28. Notabschaltvorrichtung nach Patentanspruch 27,
**dadurch gekennzeichnet, daß**
die Kontakthülsen (50, 51) zum Anschluß der in diesen längsverschieblich gelagerten Kontaktbolzen (K'') einen radial vorstehenden Lagerbund (52) aufweisen, mit welchem diese unverschieblich in der Wandung des Schaltergehäuses (5''') an der unteren Schaltergehäuseseite (10) festgelegt sind.

29. Notabschaltvorrichtung nach Anspruch 26,
**dadurch gekennzeichnet, daß**
die Kontakthülsen (54) an der unteren Schaltergehäuseseite (10) lösbar festlegbar sind, wobei in diesen zur elektrischen Kontaktierung der dort vorstehenden Kontaktbolzen (K''') eine gegen Federwirkung längsverschiebliche Kontakt- und Lagerplatte (55) jeweils angelegt ist (Fig. 2).

30. Notabschaltvorrichtung nach Patentanspruch 22 oder 23,
**dadurch gekennzeichnet, daß**
die Kontaktbolzen (K'''') unterhalb der zur unteren Schaltergehäuseseite 10 längsverschieblichen Kontaktbrücke (30) als winkelförmig seitlich nach außen abgebogene Schiebekontakte (K'''') ausgebildet sind, welche gegen seitliche, durch die untere Schaltergehäuseseite (10) geführte, dort fest angeordnete Kontaktstücke (46, 47) längsverschieblich gelagert sind.

31. Notabschaltvorrichtung nach Patentanspruch 30,
**dadurch gekennzeichnet, daß**
die Schiebekontakte (K'''') an der Kontaktbrücke (30) zueinander seitlich vertauscht auf der Vorderseite bzw. Rückseite angelegt sind.

32. Notabschaltvorrichtung nach Patentanspruch 30 oder 31,
**dadurch gekennzeichnet, daß**
die Anlage der Schiebekontakte (K'''')mittels einer Gelenkverbindung (48) erfolgt, wobei die abgewinkelten Schiebekontakte (K'''') nach oben über die Kontaktbrücke (30) hinaus zu den Stiftkontakten (14) bzw. gemeinsamen Kontaktteilen (14', 16) vorstehen und durch diese in der Schaltstellung "Ein" die Schiebekontakte (K'''') kontaktiert werden, wobei **dadurch** gleichzeitig ein Gegendruck zur Kontaktierung der seitlichen fest angeordneten Kontaktstücke (46, 47) an den Schiebekontakten erzeugt wird.

33. Notabschaltvorrichtung nach Anspruch 32,
**dadurch gekennzeichnet, daß**
die Schiebekontakte (K'''') aus zwei um 90° abgewinkelte Schenkelabschnitte (56, 57) jeweils bestehen, wobei die Gelenkverbindung (48) und der Drehpunkt der Schiebekontakte (K'''') in der Mitte zwischen den zwei Schenkelabschnitten angelegt ist.

34. Notabschaltvorrichtung nach den Ansprüchen 32 und 33,
**dadurch gekennzeichnet, daß**
die Schiebekontakte (K'''') mit einer Kontaktfläche (49) an ihrem seitlichen äußeren Ende längs der Kontaktstücke (46, 47) führbar sind, und mit dem anderen Ende gegenüber der planen Unterseite der Stiftkontakte (14) in einem spitzen Winkel bei der Schaltstellung "Ein" angestellt und kontaktiert sind, so daß durch Anlage der Schiebekontakte (K'''') an der Unterseite (55') der Stiftkontakte (14) der Gegendruck zur seitlichen Kontaktierung der Stiftkontakte erhöht wird.

35. Notabschaltvorrichtung nach Patentanspruch 34,
**dadurch gekennzeichnet, daß**
die äußeren Kontaktflächen (49) zur Bildung von Paßflächen entsprechend der Formgebung der Außenseite der Kontaktstücke gewölbt sind.

36. Elektro-Flurförderzeug mit einer Notabschaltvorrichtung nach einem der Patentansprüche 1-35.

37. Elektro-Flurförderzeug nach Patentanspruch 36,
**dadurch gekennzeichnet, daß**
bei einem Gabelstapler (23) die Anordnung der Notabschaltvorrichtung (1,1',1'',1''',1'''',1''''') derart außerhalb des hinteren Querträgers (24) des Gabelstaplers und seitlich außerhalb dessen Batterietroges (25) erfolgt, daß das Ende seines Steckvorrichtung-Steckerteils (13) für den Batterieanschluß in eine bis in den Batterietrog (25) sich erstreckende Ausnehmung (26) des Querträgers (24) bündig zur Innenseite des Batterietroges (25) ragt.

38. Elektro-Flurförderzeug nach Patentanspruch 36 oder 37,
**dadurch gekennzeichnet, daß**
die Anordnung der Notabschaltvorrichtung (1,1',1'', 1''', 1'''',1''''') am Gabelstapler (23) hinter dem Fahrersitz erfolgt.

39. Elektro-Flurförderzeug nach Patentanspruch 38,
**dadurch gekennzeichnet, daß**
die Befestigung der Notabschaltvorrichtung (1''') seitlich an dem Querträger (24) des Gabelstaplers (23) in einem spitzen Winkel (α) mit seiner Wandungslängsseite (45) nach vorne zum Fahrersitz ausgerichtet erfolgt.

## Claims

1. Emergency cut-out device (1, 1', 1", 1"', 1"", 1""'), in particular for interrupting the connection between an electric motor or its control unit and the traction batteries for this in electric industrial trucks, consisting of a strike knob (2) for an emergency cut-out device, a plunger (3, 3') and a switch (4, 4', 4", 4"', 4"") with at least one contact block (6) consisting of contact elements (7, 8, 9; 7', 8') which is provided in the switch chamber (5, 5', 5", 5"', 5""), wherein the immediate, direct interruption of the circuit takes place upon the strike knob (2) being struck by a snap-action mechanism (17, 38) of the switch (4, 4', 4", 4"', 4"") and an initiated cut-out operation is automatically completed, and the switch (4, 4', 4", 4"', 4"") can be brought out of this "off" switched position by pulling the strike knob (2) into an "on" switched position which establishes the current connection,
**characterised in that**
a connection (12, 12', 12", 12"', 12"") for an electric motor cable is provided on the lower switch chamber side (10), which is opposite the upper switch chamber side (11) holding the strike knob (2), and a two-terminal battery connection with integrated connector device plug part (13) for connecting an appliance socket is provided to the side of the switch chamber (5, 5', 5", 5"', 5""), wherein, through the actuation of the strike knob (2) and the resultant movement of the contact element or elements (7, 8, 9; 7', 8') of the contact block or blocks (6) according to the on or off position of the switch (4, 4', 4", 4"', 4""), at least one pin contact (14, 14') of this plug part (13) is connected to or isolated from the contact, corresponding to its phase, for the connection (12, 12', 12", 12"', 12"") of the electric motor cable.

2. Emergency cut-out device according to Claim 1,
**characterised in that**
a connector device socket part (15) for a charger connection is provided to the side of the switch chamber (5') on the side of the switch chamber (5') which is opposite the position of the connector device plug part (13), wherein the contacts of the connector device plug part are connected to the contacts of corresponding polarity of the connector device socket part.

3. Emergency cut-out device according to Claim 1 or 2,
**characterised in that**
the switch chamber (5, 5', 5", 5"', 5"") and the connector device plug part (13) and/or the connector device socket part (15) are formed as a combined multi-part chamber.

4. Emergency cut-out device according to Claim 2,
**characterised in that**
the chamber (5, 5', 5", 5"', 5"") is formed in one part.

5. Emergency cut-out device according to any one of Claims 1-4,
**characterised in that**
the connector device plug part (13) and/or the connector device socket part (15) in each case with a socket chamber attachment (60) or plug chamber attachment (61) are/is formed according to flat contact plugs (66) of two-terminal appliance connector devices for electric industrial trucks and the contacts and plug-in face thereof.

6. Emergency cut-out device according to any one of Claims 1-4,
**characterised in that**
the connector device plug part (13) and/or of the connector device socket part (15) are/is in each case formed according to the socket/plug chamber attachment, the contacts and the plug-in face of connector devices for electric industrial trucks according to the Euro standard and/or DIN standard 43589.

7. Emergency cut-out device according to any one of Claims 2-6 or 6,
**characterised in that**
a pin contact (14') of the battery connection and a socket contact (16) of the charger connection are each formed by a common contact part (14', 16) which is guided at the side on the right or the left of the plunger (3) above the lower contact element (8) of the contact block (6), wherein a pin contact (14') of the plug part (13) for the battery connection is formed on one side of the common contact part (14', 16), and a socket contact (16) of the socket part (15) of the charger connection is formed on the other side.

8. Emergency cut-out device according to any one of Claims 1-7,
**characterised in that**,
in order to separate both the positive and the negative phase of the traction batteries from the corresponding connections (12, 12', 12", 12"', 12"") of the electric motor or the control unit thereof, a respective contact block with connectable/disconnectable contact elements (7, 8, 9; 7', 8') is provided in the switch (4, 4', 4", 4"', 4"") for both phases.

9. Emergency cut-out device according to Claim 8,
**characterised in that**
the plunger (3, 3') extends centrally between the right and the left contact elements of the positive and negative phase, respectively, of the switch (4, 4', 4", 4"', 4"") and can be brought into contact with the two upper contact elements (7, 7', 9) by means of a contact bridge (30) or at least one stirrup-like receptacle part (20) and by way of the two lower contact elements (8, 8') disposed here on the outer or inner top side in order to actuate the switch (4, 4', 4", 4"', 4"").

10. Emergency cut-out device according to any one of Claims 1-9,
**characterised in that**
at least the lower contact elements (8, 8') and the plunger or plungers (3, 3') are acted upon by biasing a detent spring (17, 38) such that, upon an emergency cut-out of the switch (4, 4', 4", 4"', 4""), the plunger or plungers (3, 3') move(s) downwards without the possibility of outside influence and the lower contact elements are isolated from the upper contact elements, wherein the lower contact element or elements (8, 8') of the motor connection (12, 12', 12", 12"', 12"") can be pushed into the closed position of the contact elements (7, 8, 9; 7', 8') upon pulling the strike knob and moving the detent spring (17, 38) through the counterforce of an additional compression spring (18, 19, 37).

11. Emergency cut-out device according to Claim 9 or 10,
**characterised in that**
the contact bridge (30) or the receptacle part (20) for mounting the two contact elements (8, 8') to be moved is formed from a bearing part which extends transversely through the switch chamber and can be displaced longitudinally downwards in the latter, wherein the receptacle part (20) comprises at least one receptacle space (21) which opens downwards or centrally and in which the spaced common contact parts (7, 7') of the positive and/or negative phase are fixed, and that the lower inner wall (22) of the receptacle space (21) or the top side of the contact bridge (30) bears one or both contact element(s) (8, 8') for the connection of the positive and/or negative phase of the motor cable connection (12), wherein these contact elements (8, 8') can be brought directly or indirectly into electrically conductive contact with the corresponding contact part of the battery or charger connection upon closing the switch (4, 4', 4", 4"', 4"").

12. Emergency cut-out device according to Claim 11,
**characterised in that**
the contact elements (8) provided at the lower inner wall (22) of the receptacle space (21) can be brought directly into electrically conductive contact with the outside of corresponding common contact parts (14', 16) of the battery and charger connection (negative and positive phase, respectively).

13. Emergency cut-out device according to one or more of Claims 1-12,
**characterised in that**
the switch chamber (5") of the emergency cut-out device (1"') comprises a retaining and attachment flange (28) which is bent at an acute angle (α) with respect to the plane passing through the strike knob (2) and the plunger (3') parallel to the longitudinal sides (45) of the switch chamber.

14. Emergency cut-out device according to any one of Claims 1-13,
**characterised in that**,
in order to extinguish a discharge spark developing upon disconnecting and connecting the emergency cut-out device in a gap between the contact elements (7, 8; 7', 8') to be connected or isolated, a permanent magnet (29, 29') with its field direction (E) substantially perpendicular to the direction of movement of the mobile contact elements (8, 8') or of the contact bridge (30) bearing these or of the receptacle part (20) is provided to the side of at least one of the contact elements (7, 8; 7', 8') to be contacted or isolated, wherein a force which is directed out of the gap substantially perpendicularly to the path of the mobile contact elements (8, 8') to be contacted with the opposite fixed contact elements (7, 7') acts on the charge carrier of a developing discharge spark or arc.

15. Emergency cut-out device according to Claim 14,
**characterised in that**
the permanent magnets (29, 29') extend along all the contact face portions to be contacted of the fixed contact elements (7, 7').

16. Emergency cut-out device according to Claim 15,
**characterised in that**
the permanent magnets (29, 29') are provided at the outer sides to the side of the fixed contact elements (7, 7') which are to be contacted.

17. Emergency cut-out device according to any one of Claims 15 and 16,
**characterised in that**
a lower receptacle (33, 34), which opens downwards to the mobile contact elements (8, 8'), for the contact elements (7, 7') which are to be fixed and, to the side of this towards the outer chamber wall, a receptacle (35, 36) for mounting at least one of the permanent magnets (29, 29') are in each case provided in wall projections (31, 32) protruding on both sides radially inwards into the switch chamber (5", 5"', 5"") of the emergency cut-out device (1"', 1"", 1""').

18. Emergency cut-out device according to any one of Claims 15-17,
**characterised in that**
the contact elements (7, 8; 7', 8') are formed as longitudinal contacts and extend at the side on or above the contact bridge (30) or the inner wall (22) of the receptacle part (20) transversely to this, and that the receptacles (35, 36) for the permanent magnets (29, 29') are provided so as to extend at the side of and parallel thereto.

19. Emergency cut-out device according to Claim 18,
**characterised in that**
the receptacles (35, 36) for the permanent magnets (29, 29') are provided as longitudinal bores which are closed in the circumferential direction.

20. Emergency cut-out device according to any one of Claims 14-19,
**characterised in that** ventilation slots (41, 42, 43) are provided in the walls of the switch chamber (4") at the narrow sides (44) and longitudinal sides (45).

21. Emergency cut-out device according to Claim 20,
**characterised in that**
the ventilations slots (41, 42, 43) are provided in the chamber wall at one level in the region below the fixed contact elements (7, 7').

22. Emergency cut-out device according to any one of Claims 1-21,
**characterised in that**
the connection or connections (12, 12', 12", 12"', 12"") for the negative and/or positive line phase of the electric motor cable are formed by contact studs (K, K', K", K"', K""), passing into the region of the lower switch chamber side (10), of the contact elements (8, 8') of the contact blocks (6).

23. Emergency cut-out device according to Claim 22,
**characterised in that**
the contact stud (K, K', K", K"', K"") protrudes downwards from a bearing flange (53) or the contact bridge (30), and that the lower contact element (8, 8') of the contact block (6) of the switch (4, 4', 4", 4"', 4"") is provided on the opposite top side, and that a compression spring (18, 19, 40) is mounted between the underside and the inner wall at the lower switch chamber side (10) to reinforce contacting when the strike knob (2) is pulled ("on" switched position).

24. Emergency cut-out device according to Claim 22 or 23,
**characterised in that**
the lower end of the contact studs (K, K') comprises connection means (58, 59) for a cable lug or a cable strand, or that the contact stud (K", K"', K"") can be electrically contacted with connection means of this kind.

25. Emergency cut-out device according to Claim 23 or 24,
**characterised in that**
the bearing flange (53) at the upper end of the contact stud (K, K') protrudes radially outwards while forming a stop shoulder for the compression spring (18, 19).

26. Emergency cut-out device according to any one of Claims 9-24,
**characterised in that**
during construction a guide pin (39) is provided centrally as the mounting of the compression spring (37), with a contact bridge (30) positioned at the underside thereof, and that a receptacle (40) in the form of a longitudinal guide bore for the guide pin (39) and the compression spring (37) guided by this is also provided in the inner wall at the lower switch chamber side (10).

27. Emergency cut-out device according to any one of Claims 22-26,
**characterised in that**
the lower chamber part of the switch chamber (5, 5', 5", 5"', 5"") forms with the contact studs (K, K', K", K"', K"") and the contact bridge (30) thereof and/or the bearing flanges (53) a sliding guide, wherein the contact studs are passed through bores in the wall at the lower switch chamber side (10) or are mounted so as to be longitudinally displaceable in contact bushes (50, 51; 54) protruding outwards in a fixed manner.

28. Emergency cut-out device according to Claim 27,
**characterised in that**
the contact bushes (50, 51) comprise, in order to connect the contact studs (K") mounted so as to be longitudinally displaceable therein, a radially protruding bearing collar (52) with which these are secured in an immobile manner in the wall of the switch chamber (5"') at the lower switch chamber side (10).

29. Emergency cut-out device according to Claim 26,
**characterised in that**
the contact bushes (54) can be detachably secured to the lower switch chamber side (10), wherein a contact and bearing plate (55), which is longitudinally displaceable against spring action, is in each case provided in these for electrically contacting the contact studs (K"') protruding here (Figure 2).

30. Emergency cut-out device according to Claim 22 or 23,
**characterised in that**
the contact studs (K"") are formed below the contact bridge (30), which is longitudinally displaceable relative to the lower switch chamber side (10), as sliding contacts (K"") which are bent outwards to the side in an angular manner and are mounted so as to be longitudinally displaceable with respect to lateral contact pieces (46, 47) passing through the lower switch chamber side (10) and fixed here.

31. Emergency cut-out device according to Claim 30,
**characterised in that**
the sliding contacts (K"") at the contact bridge (30) are provided in a laterally transposed manner on the front and back, respectively.

32. Emergency cut-out device according to Claim 30 or 31,
**characterised in that**
the sliding contacts (K"") are positioned by means of a hinge joint (48), wherein the bent sliding contacts (K"") protrude upwards beyond the contact bridge (30) to the pin contacts (14) or common contact parts (14', 16), and the sliding contacts (K"") are contacted by these in the "on" switched position, wherein a counterpressure for contacting the lateral fixed contact pieces (46, 47) is thereby simultaneously produced at the sliding contacts.

33. Emergency cut-out device according to Claim 32,
**characterised in that**
the sliding contacts (K"") in each case consist of two leg portions (56, 57) bent through 90°, wherein the hinge joint (48) and the pivot of the sliding contacts (K"") are provided in the centre between the two leg portions.

34. Emergency cut-out device according to Claims 32 and 33,
**characterised in that**
the sliding contacts (K"") can be guided by a contact face (49) at their lateral outer end along the contact pieces (46, 47) and, in the "on" switched position, are set with the other end at an acute angle with respect to the plane underside of the pin contacts (14) and contacted, so that the counterpressure for laterally contacting the pin contacts is increased by positioning the sliding contacts (K"") at the underside (55') of the pin contacts (14).

35. Emergency cut-out device according to Claim 34,
**characterised in that**
the outer contact faces (49) are arched to form mating faces corresponding to the shape of the outside of the contact pieces.

36. Electric industrial truck with an emergency cut-out device according to any one of Claims 1-35.

37. Electric industrial truck according to Claim 36,
**characterised in that**,
in a fork-lift truck (23), the emergency cut-out device (1, 1', 1", 1"', 1"", 1""') is disposed outside of the rear cross member (24) of the fork-lift truck (23) and to the side outside of the battery tray (25) thereof such that the end of its connector device plug part (13) for the battery connection projects into a recess (26), extending into the battery tray (25), of the cross member (24) flush with the inside of the battery tray (25).

38. Electric industrial truck according to Claim 36 or 37,
**characterised in that**
the emergency cut-out device (1, 1', 1", 1"', 1"", 1""') is disposed on the fork-lift truck (23) behind the driver's seat.

39. Electric industrial truck according to Claim 38,
**characterised in that**
the emergency cut-out device (1"') is attached to the side of the cross member (24) of the fork-lift truck (23) at an acute angle (α), with the longitudinal side (45) of its wall oriented forwards towards the driver's seat.

## Revendications

1. Dispositif d'arrêt d'urgence (1, 1', 1'', 1''', 1'''', 1'''''), en particulier dans le cas de chariots de manutention électriques, pour supprimer la liaison entre le moteur électrique et son unité de commande et les batteries d'accumulation pour ces chariots de manutention électriques, constitué par un bouton-poussoir (2) pour une touche d'arrêt d'urgence, un coulisseau (3, 3') et un interrupteur (4, 4', 4'', 4''', 4'''') comprenant au moins un tronçon de contact (6) disposé dans un boîtier d'interrupteur (5, 5' , 5'', 5''', 5'''') et constitué par des éléments de contact (7, 8, 9 ; 7', 8'), l'interruption directe immédiate du circuit d'alimentation lors d'un impact sur le bouton-poussoir (2) ayant lieu via un mécanisme de rupture à fonctionnement brusque (17, 38) de l'interrupteur (4, 4', 4'', 4''', 4''''), un processus d'arrêt induit pouvant être guidé de manière automatique jusqu'à son terme et l'interrupteur (4, 4', 4", 4''', 4'''') pouvant être amené depuis cette position de commutation de « mise hors circuit » en exerçant une traction sur le bouton-poussoir (2) jusque dans une position de commutation de « mise en circuit » qui rétablit l'alimentation, **caractérisé en ce que** le côté inférieur (10) du boîtier de l'interrupteur qui se trouve à l'opposé du côté supérieur (11) du boîtier de l'interrupteur dans lequel vient se loger le bouton-poussoir (2), vient s'appliquer un raccord (12, 12', 12'', 12''', 12'''') pour un câble de moteur électrique et à côté du boîtier d'interrupteur (5, 5', 5'', 5''', 5'''') vient s'appliquer un raccord bipolaire pour batterie dans lequel est intégrée une partie mâle de connecteur (13) à des fins de raccordement à une prise femelle de connecteur, au moins un contact du type à broche (14, 14') de cette partie mâle (13), via l'actionnement du bouton-poussoir (2) et le déplacement qui s'ensuit du ou des éléments de contact (7, 8, 9 ; 7', 8') du ou des tronçons de contact (6), en fonction de la position de mise en circuit ou de mise hors circuit de l'interrupteur (4, 4', 4'', 4''', 4''''), est mis en liaison avec le contact correspondant à sa phase pour le raccordement (12, 12', 12'', 12''', 12'''') du câble du moteur électrique ou est séparé dudit contact.

2. Dispositif d'arrêt d'urgence selon la revendication 1, **caractérisé en ce qu'**à côté du boîtier d'interrupteur (5'), sur le côté opposé du boîtier d'interrupteur (5') destiné à l'application de la partie mâle de connecteur (13), vient s'appliquer une partie femelle de connecteur (15) pour le raccordement à un appareil de chargement, les contacts de la partie mâle du connecteur étant reliés avec les contacts de polarité correspondante de la partie femelle du connecteur.

3. Dispositif d'arrêt d'urgence selon la revendication 1 ou 2, **caractérisé en ce que** le boîtier d'interrupteur (5, 5', 5'', 5''', 5'''') et la partie mâle de connecteur (13) et/ou la partie femelle de connecteur (15) sont réalisées à la manière d'un boîtier combiné en plusieurs parties.

4. Dispositif d'arrêt d'urgence selon la revendication 2, **caractérisé en ce que** le boîtier d'interrupteur (5, 5', 5'', 5''', 5'''') est réalisé en une seule pièce.

5. Dispositif d'arrêt d'urgence selon l'une quelconque des revendications 1 à 4, **caractérisé en ce que** la réalisation de la partie mâle de connecteur (13) et/ou de la partie femelle de connecteur (15) a lieu respectivement avec une pièce rapportée faisant office de boîtier de connexion femelle (60) ou mâle (61) conformément à des connecteurs à languettes (66) de prises de courant bipolaires pour des chariots de manutention électriques, et conformément à leurs contacts et à leur physionomie d'enfichage.

6. Dispositif d'arrêt d'urgence selon l'une quelconque des revendications 1 à 4, **caractérisé en ce que** la réalisation de la partie mâle de connecteur (13) et/ou de la partie femelle de connecteur (15) a lieu respectivement conformément à la pièce rapportée faisant office de boîtier de connexion femelle/mâle, conformément aux contacts et conformément à la physionomie d'enfichage des connecteurs pour des chariots de manutention électriques selon la norme euro et/ou selon la norme DIN 43589.

7. Dispositif d'arrêt d'urgence selon l'une quelconque des revendications 2 à 6 ou bien selon la revendication 6, **caractérisé en ce qu'**on forme respectivement un contact à broche (14') du raccord de batterie et un contact à douille (16) du raccord de raccordement de chargement via un élément de contact commun (14', 16) qui est guidé latéralement, du côté droit ou du côté gauche du coulisseau (3) au-dessus de l'élément de contact inférieur (8) du tronçon de contact (6), un contact à broche (14') de la partie mâle (13) pour le raccord de batterie étant façonné contre un premier côté de l'élément de contact commun (14', 16) et un contact à douille (16) de la partie femelle (15) du raccord de raccordement de chargement étant façonné sur l'autre côté.

8. Dispositif d'arrêt d'urgence selon l'une quelconque des revendications 1 à 7, **caractérisé en ce que**, pour la suppression aussi bien de la phase positive que de la phase négative des batteries d'entraînement, par rapport aux raccords correspondants (12, 12', 12'', 12''', 12'''') du moteur électrique ou de son unité de commande, de manière respective pour les deux phases, un tronçon de contact comprenant des éléments de contact aptes à une mise en circuit/hors circuit (7, 8, 9 ; 7', 8') est disposé respectivement dans l'interrupteur (4, 4', 4'', 4''', 4'''').

9. Dispositif d'arrêt d'urgence selon la revendication 8, **caractérisé en ce que** le coulisseau (3, 3') s'étend en position centrale entre les éléments de contact droit et gauche de la phase positive, respectivement de la phase négative de l'interrupteur (4, 4', 4'', 4''', 4'''') et peut être amené, via un pont de contact (30), ou au moins via un élément de réception (20) en forme d'étrier, et avec les deux éléments de contact inférieurs (8, 8') disposés à cet endroit sur le côté supérieur externe ou interne en contact avec les deux éléments de contact supérieurs (7, 7', 9') pour l'actionnement de l'interrupteur (4, 4', 4'', 4''', 4'''').

10. Dispositif d'arrêt d'urgence selon l'une quelconque des revendications 1 à 9, **caractérisé en ce que**, au moins les éléments de contact inférieurs (8, 8') et les coulisseaux ou le coulisseau (3, 3') sont sollicités par mise en état de précontrainte d'un ressort d'encliquetage (17, 38) de telle sorte que, dans le cas d'un arrêt d'urgence de l'interrupteur (4, 4', 4'', 4''', 4''''), le coulisseau ou les coulisseaux (3, 3') peuvent être déplacés vers le bas d'une manière qui ne peut être influencée de l'extérieur, les éléments de contact inférieurs étant séparés des éléments de contact supérieurs, l'élément ou les éléments de contact inférieurs (8, 8') du raccord de moteur (12, 12', 12", 12''', 12'''') pouvant être poussés, lorsqu'on exerce une traction sur le bouton-poussoir et lorsqu'on déplace les ressorts d'encliquetage (17, 38) via la force antagoniste d'un ressort de pression supplémentaire (18, 19, 37), dans la position de fermeture des éléments de contact (7, 8, 9 ; 7', 8').

11. Dispositif d'arrêt d'urgence selon la revendication 9 ou 10, **caractérisé en ce que** le pont de contact (30) ou l'élément de réception (20) pour le positionnement des deux éléments de contact (8, 8') qui doivent être déplacés sont réalisés sous la forme d'un élément de palier s'étendant transversalement à travers le boîtier d'interrupteur et apte à se déplacer en direction longitudinale dans ce dernier vers le bas, les éléments de réception (20) présentant au moins un espace de réception (21) s'ouvrant vers le bas ou vers le milieu, espace dans lequel les éléments de contact communs espacés (7, 7') de la phase positive et/ou de la phase négative sont disposés à demeure, et **en ce que** la paroi interne inférieure (22) de l'espace de réception (21) ou le côté supérieur du pont de contact (30) supporte un élément de contact (8, 8') ou les deux pour le raccordement de la phase positive et/ou de la phase négative du raccord de moteur (12), ces éléments de contact (8, 8') pouvant être amenés, de manière directe ou indirecte, en contact électroconducteur, lors de la mise en circuit de l'interrupteur (4, 4', 4'', 4''', 4'''') avec les éléments de contact correspondant du raccord de batterie ou du raccord de raccordement de chargement.

12. Dispositif d'arrêt d'urgence selon la revendication 11, **caractérisé en ce que** les éléments de contact (8) disposés contre la paroi interne inférieure (22) de l'espace de réception (21) peuvent être amenés, de manière directe, en contact électroconducteur avec le côté externe d'éléments de contact communs correspondants (14', 16) du raccord de batterie et du raccord de raccordement de chargement (de phase négative, respectivement de phase positive).

13. Dispositif d'arrêt d'urgence selon une ou plusieurs des revendications 1 à 12, **caractérisé en ce que** le boîtier d'interrupteur (5'') du dispositif d'arrêt d'urgence (1''') présente une bride de retenue et de fixation (28) qui forme un angle aigu (α) par rapport au plan s'étendant parallèlement aux côtés longitudinaux (45) du boîtier d'interrupteur, à travers le bouton-poussoir (2) et le coulisseau (3').

14. Dispositif d'arrêt d'urgence selon l'une quelconque des revendications 1 à 13, **caractérisé en ce que**, pour l'extinction d'une étincelle de décharge qui se forme lors de la mise hors circuit et de la mise en circuit du dispositif d'arrêt d'urgence dans l'espace libre ménagé entre les éléments de contact qui doivent être reliés ou qui doivent être séparés (7, 8 ; 7', 8'), on dispose, latéralement, à côté d'au moins un des éléments de contact (7, 8 ; 7', 8') destinés à entrer en contact ou qui doivent être séparés, un aimant permanent (29, 29') dont la direction de champ (E) s'étend essentiellement perpendiculairement par rapport à la direction de mouvement des éléments de contact mobiles (8, 8') ou du pont de contact (30) qui les supporte ou encore de l'élément de réception (20), une étincelle de décharge ou un arc électrique se formant sur le support de charge générant une force qui est orientée en dehors de l'espace libre, essentiellement perpendiculairement par rapport à la voie de déplacement des éléments de contact mobiles (8, 8') destinés à entrer en contact avec les éléments de contact opposés (7, 7') montés à demeure.

15. Dispositif d'arrêt d'urgence selon la revendication 14, **caractérisé en ce que** les aimants permanents (29, 29') s'étendent le long de la totalité des sections de surfaces de contact des éléments de contact fixes (7, 7'), destinés à entrer en contact.

16. Dispositif d'arrêt d'urgence selon la revendication 15, **caractérisé en ce que** les aimants permanents (29, 29') sont disposés sur les côtés externes, en position latérale, à côté des éléments de contact (7, 7') montés à demeure, destinés à entrer en contact par voie électrique.

17. Dispositif d'arrêt d'urgence selon l'une quelconque des revendications 15 ou 16, **caractérisé en ce que**, dans des protubérances de parois (31, 32) faisant saillie de part et d'autre en direction radiale vers l'intérieur dans le boîtier d'interrupteur (5'', 5''', 5'''') du dispositif d'arrêt d'urgence (1''', 1'''', 1'''''), est disposé respectivement un évidement inférieur (33, 34) prévu pour les éléments de contact (7, 7') destinés à un montage à demeure, ledit évidement s'ouvrant vers le bas en direction des éléments de contact mobile (8, 8'), et, à côté desdites protubérances, orienté vers la paroi de boîtier externe, un évidement (35, 36) pour le montage d'au moins un des aimants permanents (29, 29').

18. Dispositif d'arrêt d'urgence selon l'une quelconque des revendications 15 à 17, **caractérisé en ce que**, les éléments de contact (7, 8 ; 7', 8') sont réalisés sous la forme de contacts longitudinaux et s'étendent latéralement sur ou au-dessus du pont de contact (30) ou de la paroi interne (22) de l'élément de réception (20), en direction transversale par rapport à ladite paroi, et **en ce que** les évidements (35, 36) pour les aimants permanents (29, 29') sont disposés en s'étendant en direction latérale parallèlement à ladite paroi.

19. Dispositif d'arrêt d'urgence selon la revendication 18, **caractérisé en ce que**, les évidements (35, 36) pour les aimants permanents (29, 29') sont disposés sous la forme d'alésages longitudinaux fermés en direction périphérique.

20. Dispositif d'arrêt d'urgence selon l'une quelconque des revendications 14 à 19, **caractérisé en ce que**, dans les parois du boîtier d'interrupteur (4''), sur les petits côtés (44) et sur les grands côtés (45), sont pratiquées des fentes d'aération (41, 42, 43).

21. Dispositif d'arrêt d'urgence selon la revendication 20, **caractérisé en ce que**, les fentes d'aération (41, 42, 43) sont pratiquées en hauteur dans la paroi du boîtier, dans la zone située en dessous des éléments de contact (7, 7') montés à demeure.

22. Dispositif d'arrêt d'urgence selon l'une quelconque des revendications 1 à 21, **caractérisé en ce que** le ou les raccords (12, 12', 12'', 12''', 12'''') pour la phase de puissance négative et/ou positive du câble du moteur électrique sont réalisés via des boulons de contact (K, K', K'', K''', K'''') des éléments de contact (8, 8') du tronçon de contact (6) guidés dans la zone du côté inférieur (10) du boîtier d'interrupteur.

23. Dispositif d'arrêt d'urgence selon la revendication 22, **caractérisé en ce que** le boulon de contact (K, K', K'', K''', K'''') d'une bride de palier (53) ou du pont de contact (30) fait saillie vers le bas et **en ce que**, sur le côté supérieur opposé, est disposé l'élément de contact inférieur (8, 8') du tronçon de contact (6) de l'interrupteur (4, 4', 4", 4'''', 4'''''), et **en ce que**, entre le côté inférieur et la paroi interne, est monté un ressort de pression (18, 19, 40) sur le côté inférieur (10) du boîtier d'interrupteur pour renforcer l'établissement du contact lorsque le bouton-poussoir (2) est tiré (position de commutation de « mise en service »).

24. Dispositif d'arrêt d'urgence selon la revendication 22 ou 23, **caractérisé en ce que** l'extrémité inférieure du boulon de contact (K, K') présente des raccords (58, 59) pour une cosse de câble ou pour un toron de câble, ou bien **en ce que** le boulon de contact (K'', K''', K'''') peut être mis en contact électrique avec des raccords de ce type.

25. Dispositif d'arrêt d'urgence selon la revendication 23 ou 24, **caractérisé en ce que** la bride de palier (53) fait saillie en direction radiale vers l'extérieur sur l'extrémité supérieure du boulon de contact (K'', K''', K'''') en formant un épaulement de butée pour le ressort de pression (18, 19).

26. Dispositif d'arrêt d'urgence selon l'une quelconque des revendications 9 à 24, **caractérisé en ce que**, à titre de palier du ressort de pression (35) lors de sa mise en contact d'un pont de contact (30) avec le côté inférieur de ce dernier, on dispose au centre un boulon de guidage (39), et **en ce qu'**on dispose en outre dans la paroi interne, contre le côté inférieur (10) du boîtier d'interrupteur, un évidement (40) sous la forme d'un alésage de guidage longitudinal pour le boulon de guidage (39) et du réseau de pression (37) guidé par ce dernier.

27. Dispositif d'arrêt d'urgence selon l'une quelconque des revendications 22 à 26, **caractérisé en ce que** la partie inférieure du boîtier d'interrupteur (5, 5', 5'', 5''', 5'''') forme, avec le boulon de contact (K, K', K'', K''', K'''') et son pont de contact (30) et/ou la bride de palier (53), un guidage coulissant, les boulons de contact étant guidés à travers des alésages pratiqués dans la paroi contre le côté inférieur (10) du boîtier et d'interrupteur ou bien étant montés en déplacement longitudinal, dans des douilles de contact faisant saillie de cette manière à demeure vers l'extérieur (50, 54 ; 54).

28. Dispositif d'arrêt d'urgence selon la revendication 27, **caractérisé en ce que** les douilles de contact (50, 51) à des fins de raccordement avec les boulons de contact (K'') montés dans les premières citées de façon à effectuer un déplacement longitudinal, présentent une bride de palier (52) faisant saillie en direction radiale avec laquelle lesdites douilles sont montées à demeure en immobilité dans la paroi du boîtier d'interrupteur (5'''') sur le côté inférieur (10) du boîtier d'interrupteur.

29. Dispositif d'arrêt d'urgence selon la revendication 26, **caractérisé en ce que** les douilles de contact (54) peuvent venir se fixer de manière amovible sur le côté inférieur (10) du boîtier d'interrupteur, une plaque de contact et de support (55) apte à se déplacer en direction longitudinale à l'encontre de l'effet de ressort, pour la mise en contact électrique des boulons de contact (K''') faisant saillie à cet endroit, étant respectivement disposées dans les douilles en question (voir la figure 2).

30. Dispositif d'arrêt d'urgence selon la revendication 22 ou 23, **caractérisé en ce que** les boulons de contact (K''') sont réalisés, en dessous du pont de contact (30) apte à se déplacer en direction longitudinale en direction du côté inférieur (10) du boîtier d'interrupteur, sous la forme de contacts par coulissement (K'''') formant un angle en étant pliés vers l'extérieur en direction latérale, lesdits contacts étant montés en étant à même de se déplacer en direction longitudinale contre des tronçons de contact (46, 47) disposés à demeure à cet endroit et guidés latéralement via le côté inférieur (10) du boîtier d'interrupteur.

31. Dispositif d'arrêt d'urgence selon la revendication 30, **caractérisé en ce que** les contacts par coulissement (K'''') viennent se disposer contre le pont de contact de (30) en étant soumis à une permutation latérale réciproque sur le côté avant, respectivement sur le côté arrière.

32. Dispositif d'arrêt d'urgence selon la revendication 30 ou 31, **caractérisé en ce que** la mise en appui des contacts par coulissement (K'''') a lieu à l'aide d'une liaison articulée (48), les contacts par coulissement (K'''') formant un angle faisant saillie vers le haut au-delà du pont de contact (30) en direction des contacts à broches (14), respectivement des tronçons de contacts communs (14', 16), les contacts par coulissement (K'''') étant ainsi mis en contact via ladite liaison articulée dans la position de commutation de « mise en circuit », si bien que l'on obtient de manière simultanée une pression antagoniste pour la mise en contact des tronçons de contact (46, 47) disposés à demeure en position latérale, avec les contacts par coulissement.

33. Dispositif d'arrêt d'urgence selon la revendication 32, **caractérisé en ce que** les contacts par coulissement (K'''') sont constitués respectivement par deux sections de branches (56, 57) formant un angle de 90°, la liaison articulée (48) et le point d'appui des contacts par coulissement (K'''') étant disposés au centre entre les deux sections de branches.

34. Dispositif d'arrêt d'urgence selon la revendication 32 et 33, **caractérisé en ce que** les contacts par coulissement (K'''') peuvent être guidés avec une surface de contact (49) sur leur extrémité externe latérale, le long des tronçons de contact (46, 47), et peuvent venir se disposer, avec leur autre extrémité, à l'opposé du côté inférieur plan des contacts à broches (14) en formant un angle aigu dans la position de commutation de « mise en circuit » en étant ainsi mis en contact, si bien que par la mise en appui des contacts par coulissement (K'''') contre le côté inférieur (55') des contacts à broches (14), la pression antagoniste pour la mise en contact latéral des contacts à broche s'élève.

35. Dispositif d'arrêt d'urgence selon la revendication 34, **caractérisé en ce que** les surfaces de contact externes (49) pour la formation de surfaces d'ajustement qui épousent la configuration du côté externe des tronçons de contact sont bombées.

36. Chariot de manutention électrique comprenant un dispositif d'arrêt d'urgence selon l'une quelconque des revendications 1 à 35.

37. Chariot de manutention électrique selon la revendication 36, **caractérisé en ce que**, dans le cas d'un chariot élévateur à fourche (23), l'agencement du dispositif d'arrêt d'urgence (1, 1', 1'', 1''', 1'''', 1''''') a lieu à l'extérieur de la barre transversale arrière (24) et latéralement à l'extérieur de son châssis pour batterie (25), de telle sorte que l'extrémité de sa partie mâle de connecteur (13) pour le raccordement de la batterie fait saillie dans un évidement (26) de la barre transversale (24) s'étendant jusque dans le châssis pour batterie (25), à fleur avec le côté interne du châssis pour batterie (25).

38. Chariot de manutention électrique selon la revendication 36 ou 37, **caractérisé en ce que** l'agencement du dispositif d'arrêt d'urgence (1, 1', 1'', 1''', 1'''', 1''''') sur le chariot élévateur à fourche (23) a lieu derrière le siège du conducteur.

39. Chariot de manutention électrique selon la revendication 38, **caractérisé en ce que** la fixation du dispositif d'arrêt d'urgence (1''') a lieu latéralement sur la barre transversale (24) du chariot élévateur à fourche (23) en formant un angle aigu (α), son côté longitudinal de paroi étant orienté vers l'avant par rapport au siège de conducteur.
